# EUROPEAN PATENT APPLICATION

(11) **EP 4 109 950 A1**
(43) Date of publication of application: **28.12.2022**
(21) Application number: 21780141.4
(22) Date of filing: 18.03.2021
(51) Int. Cl.: H04W 16/14

(54) **RESOURCE DETERMINATION METHOD AND APPARATUS**

(30) Priority: 30.03.2020 CN 202010238444; 10.04.2020 CN 202010280182
(71) Applicant: HUAWEI TECHNOLOGIES CO., LTD., Shenzhen Guangdong 518129 (CN)
(72) Inventor: KUANG, Yiru, Shenzhen, Guangdong 518129 (CN); XU, Haibo, Shenzhen, Guangdong 518129 (CN); SHI, Yulong, Shenzhen, Guangdong 518129 (CN); WANG, Jun, Shenzhen, Guangdong 518129 (CN); XIAO, Xiao, Shenzhen, Guangdong 518129 (CN); ZHAO, Li, Shenzhen, Guangdong 518129 (CN)
(74) Representative: Pfenning, Meinig & Partner mbB
(86) International application number: PCT/CN2021/081583
(87) International publication number: WO 2021/197086

(57) **Abstract**

This application provides a resource determining method and an apparatus. The method includes: Transmission user equipment receives scheduling request SR configuration information sent by a network device, where the SR configuration information corresponds to a sidelink signaling radio bearer SL SRB, the SR configuration information is used to indicate a first SR resource, and the transmission user equipment is a device on a sidelink SL. The transmission user equipment sends an SR to the network device by using the first SR resource. According to the method, SR configuration information can be determined for the transmission user equipment on the sidelink, so that the transmission user equipment determines an SR resource, and requests an uplink resource or an SL resource from a base station by using the SR resource. This reduces signaling overheads, power consumption of the user equipment, and an uplink resource obtaining delay.

## Description

This application claims priority to Chinese Patent Application No. 202010238444.4, filed with the China National Intellectual Property Administration on March 30, 2020 and entitled "SCHEDULING REQUEST CONFIGURATION METHOD, UE, AND NETWORK DEVICE", which is incorporated herein by reference in its entirety. This application claims priority to Chinese Patent Application No. 202010280182.8, filed with the China National Intellectual Property Administration on April 10, 2020 and entitled "RESOURCE DETERMINING METHOD AND APPARATUS", which is incorporated herein by reference in its entirety.

### TECHNICAL FIELD

This application relates to the communications field, and more specifically, to a resource determining method and an apparatus in the communications field.

### BACKGROUND

In a fifth generation (fifth generation, 5G) mobile communications system, in a device-to-device (device-to-device, D2D) direct communication (direct communication) manner or a vehicle-to-everything (vehicle-to-everything, V2X) scenario, transmission user equipment (transmission user equipment, TX UE) may directly send data to reception user equipment (reception user equipment, RX UE) without requiring forwarding by a network device or a cellular network. A direct link between the TX UE and the RX UE is referred to as a sidelink (sidelink, SL), and an interface between the TX UE and the RX UE is referred to as a PC5 interface. A link between the UE and the network device is referred to as a cellular link (cellular link), and an interface between the UE and the network device is referred to as a Uu interface.

During D2D communication, when the TX UE needs to send data to the RX UE, if there is no available SL resource currently, the TX UE may send a buffer status report (buffer status report, BSR) to the network device, and notify the network device of an amount of to-be-sent data by using the BSR, so that the network device can determine, based on the amount of to-be-sent data in the BSR, a quantity of SL resources to be allocated to the TX UE. This implements communication between the TX UE and the RX UE. Specifically, after the TX UE triggers the BSR, if there is no available SL resource to send the BSR currently, the TX UE first sends a scheduling request (scheduling request, SR) to the network device, to notify the network device that there is data that needs to be sent. After receiving the SR, the network device may allocate, to the TX UE, an uplink resource that is at least sufficient for sending the BSR. The TX UE sends the BSR to the network device by using the uplink resource.

The TX UE may send the SR to the network device by using an SR resource. Currently, for D2D/V2X communication, the TX UE does not have an SR resource configured for an SL signaling radio bearer (signaling radio bearer, SRB). To be specific, for sending of data carried on the SL SRB, the TX UE cannot request the SL resource or the UL resource from the network device by sending the SR, but can request the SL resource only by triggering contention-based random access to request the uplink resource from the network devices to send the BSR. However, requesting an uplink resource through random access increases signaling overheads, power consumption, and a communication delay.

### SUMMARY

This application provides a resource determining method and an apparatus. According to the method, SR configuration information can be determined for transmission user equipment on a sidelink, so that the transmission user equipment determines an SR resource, and requests an uplink resource or an SL resource from a base station by using the SR resource. This reduces signaling overheads, power consumption of the user equipment, and an uplink resource obtaining delay.

According to a first aspect, a resource determining method is provided. The method includes: Transmission user equipment receives scheduling request SR configuration information sent by a network device. The SR configuration information corresponds to a sidelink signaling radio bearer SL SRB, the SR configuration information is used to indicate a first SR resource, and the transmission user equipment is a device on a sidelink SL. The transmission user equipment sends an SR to the network device by using the first SR resource.

When the transmission user equipment has no available uplink (uplink) resource, and the transmission user equipment buffers a to-be-transmitted message to be sent to another reception user equipment, an SR resource may be determined for the transmission user equipment by using the resource determining method in this embodiment of this application, so as to send an SR to the network device. The SR is used to request to allocate an uplink resource or a sidelink resource for transmitting newly to-be-transmitted data. Therefore, the network device may configure, for the transmission user equipment, an uplink resource used to send a BSR, and further allocate a sidelink (SL) resource to the transmission user equipment and UE 30, or the network device may allocate a sidelink (SL) resource to the transmission user equipment.

It should be understood that the "to-be-transmitted message" in this embodiment of this application may be one or more of the following enumerated PC5-RRC message and PC5-S message, or the "to-be-transmitted message" in this embodiment of this application may be a message carried on the SL SRB.

For example, the to-be-transmitted message includes at least one of a PC5 radio resource control PC5-RRC message, an unprotected PC5 signalingingPC5-S message, a PC5-S message establishing PC5-S security, and a protected PC5-S message.

It should be further understood that, that the SR configuration information corresponds to an SL SRB may mean that one SL SRB corresponds to one piece of SR configuration information, or one SL SRB corresponds to a plurality of pieces of SR configuration information, or one piece of SR configuration information corresponds to a plurality of SL SRBs. This is not limited in this embodiment of this application.

Optionally, the SR configuration information (schedulingRequestConfig) may include at least one piece of information such as an SR identifier ID (schedulingRequestID), an SR sending prohibit timer (SR-ProhibitTimer), and a maximum quantity of SR retransmissions (SR-TransMax).

In addition to the SR configuration information (schedulingRequestConfig), the network device may further configure SR resource configuration information (SchedulingRequestResourceConfig) for the transmission user equipment. The SR resource configuration information may include an SR ID (schedulingRequestID), an SR resource ID (schedulingRequestResourceID), an SR periodicity and offset (periodicityAndOffset), and the like.

Therefore, after receiving the SR configuration information sent by the network device, the transmission user equipment may determine an SR ID. The SR ID may correspond to an SR resource ID. Then, the transmission user equipment further determines an SR resource based on the SR resource ID, for example, the "first SR resource" in this embodiment of this application. In other words, the first SR resource is an uplink resource used by the transmission user equipment to finally send the SR to the network device.

According to the foregoing technical solution, a base station configures SR configuration information for UE, so that the UE can determine a first SR resource by using the SR configuration information, and send an SR to the base station by using the first SR resource, to request an uplink resource or an SL resource. This reduces signaling overheads, power consumption of the UE, and an uplink resource obtaining delay.

With reference to the first aspect, in some possible implementations, the SR configuration information is preset SR configuration information, and before the transmission user equipment sends the SR to the network device by using the first SR resource, the method further includes: The transmission user equipment determines that the SR configuration information is the preset SR configuration information.

According to a second aspect, a resource determining method is provided. The method includes: Transmission user equipment determines a corresponding first SR resource based on preset SR configuration information. The transmission user equipment is a device on a sidelink SL. The transmission user equipment sends an SR to a network device by using the first SR resource.

Optionally, the preset SR configuration information may be understood as SR configuration information that is specified in a protocol. A base station 10 and UE 20 may reach a consensus, and both learn of specific preset SR configuration information included in the preset SR configuration information. It should be understood that one or more pieces of preset SR configuration information are specified in the protocol, and an amount of preset SR configuration information is not limited in this embodiment of this application.

Optionally, the preset SR configuration information may be included in a dedicated configuration instruction of the base station 10 for an SCCH. The base station 10 configures the preset SR configuration information for the UE 20 when configuring the SCCH. In this case, the first SR resource may be understood as an SR resource determined by using the preset SR configuration information.

For example, in the dedicated configuration instruction of the SCCH, a parameter may be added to indicate the SR configuration information, for example, "schedulingRequest ID=X", where X may be any value in a set {X, Y, Z, M, N...}. Alternatively, the parameter may indicate a plurality of values in the set {X, Y, Z, M, N...}. For example, schedulingRequestID=X, Y, or Z.

In the foregoing technical solution, SR configuration information is preset for the network device and the user equipment in a standard. During specific implementation, the network device may flexibly determine whether a dedicated SR resource is configured for an SL SRB of the user equipment. When the network device determines that the dedicated SR resource can be configured for the SL SRB of the user equipment, the network device adds the preset SR configuration information when configuring the SR resource for the user equipment, so that the user equipment can send an SR to the network device by using the preset SR resource, to request an uplink resource or an SL resource. This reduces signaling overheads, power consumption of the user equipment, and an uplink resource obtaining delay.

With reference to the foregoing implementation, in some possible implementations, the SR configuration information is SR configuration information of at least one signaling radio bearer SRB between the transmission user equipment and the network device; and/or the SR configuration information is SR configuration information of at least one data radio bearer DRB between the transmission user equipment and the network device; and/or the SR configuration information is SR configuration information of at least one sidelink data radio bearer SL DRB of the transmission user equipment; and/or the SR configuration information is SR configuration information of at least one sidelink channel state information CSI report of the transmission user equipment.

According to the foregoing technical solution, the network device associates determined SR configuration information with existing SR configuration information when configuring an SR resource for the user equipment, so that the user equipment can determine the first SR resource by using the SR configuration information, and send the SR to the network device by using the first SR resource, to request an uplink resource or an SL resource. This reduces signaling overheads, power consumption of the user equipment, and an uplink resource obtaining delay.

With reference to the foregoing implementations, in some possible implementations, the transmission user equipment buffers a to-be-transmitted message to be sent to at least one reception user equipment; and all the to-be-transmitted messages have same SR configuration information; or all the to-be-transmitted messages have different SR configuration information; or to-be-transmitted messages of a same type have same SR configuration information, and to-be-transmitted messages of different types have different SR configuration information; or at least two to-be-transmitted messages have same SR configuration information; or to-be-transmitted messages of same reception user equipment have same SR configuration information; or to-be-transmitted messages of different types of same reception user equipment have different SR configuration information; or to-be-transmitted messages of different types of different reception user equipments have different SR configuration information; or to-be-transmitted messages of a same type of different reception user equipments have same SR configuration information.

In conclusion, the network device configures different SR configuration information for different target user equipments. In each target UE, both an SL SRB that carries a PC5-RRC message and SL SRBs that carry three types of PC5-S messages may have different SR configuration information.

With reference to the foregoing implementations, in some possible implementations, the SR configuration information further includes indication information, and the indication information indicates whether the first SR resource is an SR resource for requesting a sidelink sidelink, or the indication information indicates whether the SR configuration information can be used for an SL SRB on a sidelink sidelink.

According to the foregoing technical solution, the indication information is added to the SR configuration information determined by the network device, so that the user equipment can determine, based on the indication information, whether the first resource can be used as the SR resource for requesting the sidelink sidelink. When the first resource can be used as the SR resource for requesting the sidelink sidelink, the user equipment may determine the first SR resource by using the SR configuration information, and send the SR to the network device by using the first SR resource, to request an uplink resource or an SL resource. This reduces signaling overheads, power consumption of the user equipment, and an uplink resource obtaining delay. When the first resource cannot be used as the SR resource for requesting the sidelink sidelink, the user equipment may trigger a random access procedure to obtain an uplink resource.

With reference to the foregoing implementations, in some possible implementations, the SR configuration information includes one or more SR identifiers IDs.

According to a third aspect, a resource determining method is provided. The method includes: A network device sends scheduling request SR configuration information to transmission user equipment. The SR configuration information corresponds to a sidelink signaling radio bearer SL SRB, the SR configuration information is used to indicate a first SR resource, and the transmission user equipment is a device on a sidelink SL. The network device receives an SR that is sent by the transmission user equipment by using the first SR resource.

With reference to the foregoing implementation, in some possible implementations, the SR configuration information is preset SR configuration information.

According to a fourth aspect, a resource determining method is provided. The method includes: A network device determines a corresponding first SR resource based on preset SR configuration information. The network device receives an SR that is sent by transmission user equipment by using the first SR resource. The transmission user equipment is a device on a sidelink SL.

With reference to the foregoing implementation, in some possible implementations, the SR configuration information is SR configuration information of at least one signaling radio bearer SRB between the transmission user equipment and the network device; and/or the SR configuration information is SR configuration information of at least one data radio bearer DRB between the transmission user equipment and the network device; and/or the SR configuration information is SR configuration information of at least one sidelink data radio bearer SL DRB of the transmission user equipment; and/or the SR configuration information is SR configuration information of at least one sidelink channel state information CSI report of the transmission user equipment.

With reference to the foregoing implementations, in some possible implementations, the transmission user equipment buffers a to-be-transmitted message to be sent to at least one reception user equipment; and all the to-be-transmitted messages have same SR configuration information; or all the to-be-transmitted messages have different SR configuration information; or to-be-transmitted messages of a same type have same SR configuration information, and to-be-transmitted messages of different types have different SR configuration information; or at least two to-be-transmitted messages have same SR configuration information; or to-be-transmitted messages of same reception user equipment have same SR configuration information; or to-be-transmitted messages of different types of same reception user equipment have different SR configuration information; or to-be-transmitted messages of different types of different reception user equipments have different SR configuration information; or to-be-transmitted messages of a same type of different reception user equipments have same SR configuration information.

With reference to the foregoing implementations, in some possible implementations, the SR configuration information further includes indication information, and the indication information indicates whether the first SR resource is an SR resource for requesting a sidelink sidelink, or the indication information indicates whether the SR configuration information can be used for an SL SRB on a sidelink sidelink.

With reference to the foregoing implementations, in some possible implementations, the to-be-transmitted message includes at least one of a PC5 radio resource control PC5-RRC message, an unprotected PC5 signalingingPC5-S message, a PC5-S message establishing PC5-S security, and a protected PC5-S message.

With reference to the foregoing implementations, in some possible implementations, the SR configuration information includes one or more SR identifiers IDs.

According to a fifth aspect, a resource determining apparatus is provided. The apparatus includes: a receiving unit, configured to receive scheduling request SR configuration information sent by a network device, where the SR configuration information corresponds to a sidelink signaling radio bearer SL SRB, and the SR configuration information is used to indicate a first SR resource; and a sending unit, configured to send an SR to the network device by using the first SR resource.

With reference to the foregoing implementation, in some possible implementations, the SR configuration information is preset SR configuration information, and the apparatus further includes: a processing unit, configured to determine that the SR configuration information is the preset SR configuration information.

According to a sixth aspect, a resource determining apparatus is provided. The apparatus includes: a processing unit, configured to determine a corresponding first SR resource based on preset SR configuration information; and a sending unit, configured to send an SR to a network device by using the first SR resource.

With reference to the foregoing implementation, in some possible implementations, the SR configuration information is SR configuration information of at least one signaling radio bearer SRB between the apparatus and the network device; and/or the SR configuration information is SR configuration information of at least one data radio bearer DRB between the apparatus and the network device; and/or the SR configuration information is SR configuration information of at least one sidelink data radio bearer SL DRB of the apparatus; and/or the SR configuration information is SR configuration information of at least one sidelink channel state information CSI report of the apparatus.

With reference to the foregoing implementations, in some possible implementations, the apparatus buffers a to-be-transmitted message to be sent to at least one reception user equipment; and all the to-be-transmitted messages have same SR configuration information; or all the to-be-transmitted messages have different SR configuration information; or to-be-transmitted messages of a same type have same SR configuration information, and to-be-transmitted messages of different types have different SR configuration information; or at least two to-be-transmitted messages have same SR configuration information; or to-be-transmitted messages of same reception user equipment have same SR configuration information; or to-be-transmitted messages of different types of same reception user equipment have different SR configuration information; or to-be-transmitted messages of different types of different reception user equipments have different SR configuration information; or to-be-transmitted messages of a same type of different reception user equipments have same SR configuration information.

With reference to the foregoing implementations, in some possible implementations, the SR configuration information further includes indication information, and the indication information indicates whether the first SR resource is an SR resource for requesting a sidelink sidelink, or the indication information indicates whether the SR configuration information can be used for an SL SRB on a sidelink sidelink.

With reference to the foregoing implementations, in some possible implementations, the to-be-transmitted message includes at least one of a PC5 radio resource control PC5-RRC message, an unprotected PC5 signalingingPC5-S message, a PC5-S message establishing PC5-S security, and a protected PC5-S message.

With reference to the foregoing implementations, in some possible implementations, the SR configuration information includes one or more SR identifiers IDs.

According to a seventh aspect, a resource determining apparatus is provided. The apparatus includes: a sending unit, configured to send scheduling request SR configuration information to transmission user equipment, where the SR configuration information corresponds to a sidelink signaling radio bearer SL SRB, the SR configuration information is used to indicate a first SR resource, and the transmission user equipment is a device on a sidelink SL; and a receiving unit, configured to receive an SR that is sent by the transmission user equipment by using the first SR resource.

With reference to the foregoing implementation, in some possible implementations, the SR configuration information is preset SR configuration information.

According to an eighth aspect, a resource determining apparatus is provided. The apparatus includes: a processing unit, configured to determine a corresponding first SR resource based on preset SR configuration information; and a receiving unit, configured to receive an SR that is sent by transmission user equipment by using the first SR resource, where the transmission user equipment is a device on a sidelink SL.

With reference to the foregoing implementation, in some possible implementations, the SR configuration information is SR configuration information of at least one signaling radio bearer SRB between the transmission user equipment and the apparatus; and/or the SR configuration information is SR configuration information of at least one data radio bearer DRB between the transmission user equipment and the apparatus; and/or the SR configuration information is SR configuration information of at least one sidelink data radio bearer SL DRB of the transmission user equipment; and/or the SR configuration information is SR configuration information of at least one sidelink channel state information CSI report of the transmission user equipment.

With reference to the foregoing implementations, in some possible implementations, the transmission user equipment buffers a to-be-transmitted message to be sent to at least one reception user equipment; and all the to-be-transmitted messages have same SR configuration information; or all the to-be-transmitted messages have different SR configuration information; or to-be-transmitted messages of a same type have same SR configuration information, and to-be-transmitted messages of different types have different SR configuration information; or at least two to-be-transmitted messages have same SR configuration information; or to-be-transmitted messages of same reception user equipment have same SR configuration information; or to-be-transmitted messages of different types of same reception user equipment have different SR configuration information; or to-be-transmitted messages of different types of different reception user equipments have different SR configuration information; or to-be-transmitted messages of a same type of different reception user equipments have same SR configuration information.

With reference to the foregoing implementations, in some possible implementations, the SR configuration information further includes indication information, and the indication information indicates whether the first SR resource is an SR resource for requesting a sidelink sidelink, or the indication information indicates whether the SR configuration information can be used for an SL SRB on a sidelink sidelink.

With reference to the foregoing implementations, in some possible implementations, the to-be-transmitted message includes at least one of a PC5 radio resource control PC5-RRC message, an unprotected PC5 signalingingPC5-S message, a PC5-S message establishing PC5-S security, and a protected PC5-S message.

With reference to the foregoing implementations, in some possible implementations, the SR configuration information includes one or more SR identifiers IDs.

According to a ninth aspect, a resource determining method is provided. The method is applied to a system including transmission user equipment, at least one reception user equipment, and a network device. The method includes: The transmission user equipment receives scheduling request SR configuration information sent by the network device. The SR configuration information corresponds to a sidelink signaling radio bearer SL SRB. The transmission user equipment determines a corresponding first SR resource based on the SR configuration information. The transmission user equipment sends an SR to the network device by using the first SR resource.

With reference to the ninth aspect, in some possible implementations, the SR configuration information is preset SR configuration information; or when the SR configuration information is not the preset SR configuration information, the method further includes: The transmission user equipment initiates a random access procedure to the network device.

With reference to the ninth aspect and the foregoing implementations, in some possible implementations, the SL SRB is associated with SR configuration information corresponding to at least one signaling radio bearer SRB of the network device; or the SL SRB is associated with SR configuration information corresponding to at least one data radio bearer DRB of the transmission user equipment and the network device; or the SL SRB is associated with SR configuration information corresponding to at least one sidelink channel state information CSI report of the transmission user equipment.

With reference to the ninth aspect and the foregoing implementations, in some possible implementations, when the transmission user equipment buffers a to-be-transmitted message to be sent to at least one reception user equipment, the preset SR configuration information is determined based on a message type of the to-be-transmitted message, and the to-be-transmitted message is carried in the SL SRB.

With reference to the ninth aspect and the foregoing implementations, in some possible implementations, the to-be-transmitted message includes a first message set and a second message set, and each message set includes at least one message. In addition, a message type in the first message set is different from that in the second message set. The preset SR configuration information includes a first SR configuration information set and a second SR configuration information set, and each SR configuration information set includes at least one piece of SR configuration information. Each piece of SR configuration information in the first SR configuration information set corresponds to at least one message in the first message set, and each piece of SR configuration information in the second SR configuration information set corresponds to at least one message in the second message set.

With reference to the ninth aspect and the foregoing implementations, in some possible implementations, a destination address of each message in each of the first message set and the second message set is first reception user equipment; or a destination address of each message in the first message set is the first reception user equipment, and a destination address of each message in the second message set is second reception user equipment.

With reference to the ninth aspect and the foregoing implementations, in some possible implementations, the preset SR configuration information is determined based on a destination address corresponding to the to-be-transmitted message, and the to-be-transmitted message is carried in the SL SRB.

With reference to the ninth aspect and the foregoing implementations, in some possible implementations, the to-be-transmitted message includes a third message set and a fourth message set, and each message set includes at least one message. In addition, a destination address of each message in the third message set is first reception user equipment, and a destination address of each message in the fourth message set is second reception user equipment. The preset SR configuration information includes a third SR configuration information set and a fourth SR configuration information set, and each SR configuration information set includes at least one piece of SR configuration information. Any piece of SR configuration information in the third SR configuration information set is associated with each message in the third message set, and any piece of SR configuration information in the fourth SR configuration information set is associated with each message in the fourth message set.

With reference to the ninth aspect and the foregoing implementations, in some possible implementations, the SR configuration information further includes indication information indicating whether the first SR resource can be used to send the SR to the network device.

With reference to the ninth aspect and the foregoing implementations, in some possible implementations, the to-be-transmitted message includes at least one of a PC5 radio resource control PC5-RRC message, an unprotected PC5 signalingingPC5-S message, a PC5-S message establishing PC5-S security, and a protected PC5-S message.

With reference to the ninth aspect and the foregoing implementations, in some possible implementations, the SR configuration information includes an SR identifier ID.

According to a tenth aspect, a resource determining method is provided. The method is applied to a system including transmission user equipment, at least one reception user equipment, and a network device. The method includes: The network device sends scheduling request SR configuration information to the transmission user equipment. The SR configuration information corresponds to a sidelink signaling radio bearer SL SRB. The network device determines a corresponding first SR resource based on the SR configuration information. The network device receives an SR that is sent by the transmission user equipment by using the first SR resource.

With reference to the tenth aspect, in some possible implementations, the SR configuration information is preset SR configuration information; or when the SR configuration information is not the preset SR configuration information, the method further includes: The network device receives a random access procedure initiated by the transmission user equipment.

With reference to the tenth aspect and the foregoing implementations, in some possible implementations, the SL SRB is associated with SR configuration information corresponding to at least one signaling radio bearer SRB of the network device; or the SL SRB is associated with SR configuration information corresponding to at least one data radio bearer DRB of the transmission user equipment and the network device; or the SL SRB is associated with SR configuration information corresponding to at least one sidelink channel state information CSI report of the transmission user equipment.

With reference to the tenth aspect and the foregoing implementations, in some possible implementations, when the transmission user equipment buffers a to-be-transmitted message to be sent to at least one reception user equipment, the preset SR configuration information is determined based on a message type of the to-be-transmitted message, and the to-be-transmitted message is carried in the SL SRB.

With reference to the tenth aspect and the foregoing implementations, in some possible implementations, the to-be-transmitted message includes a first message set and a second message set, each message set includes at least one message, and a message type in the first message set is different from that in the second message set. The preset SR configuration information includes a first SR configuration information set and a second SR configuration information set, and each SR configuration information set includes at least one piece of SR configuration information. Each piece of SR configuration information in the first SR configuration information set corresponds to at least one message in the first message set, and each piece of SR configuration information in the second SR configuration information set corresponds to at least one message in the second message set.

With reference to the tenth aspect and the foregoing implementations, in some possible implementations, a destination address of each message in each of the first message set and the second message set is first reception user equipment; or a destination address of each message in the first message set is the first reception user equipment, and a destination address of each message in the second message set is second reception user equipment.

With reference to the tenth aspect and the foregoing implementations, in some possible implementations, the preset SR configuration information is determined based on a destination address corresponding to the to-be-transmitted message, and the to-be-transmitted message is carried in the SL SRB.

With reference to the tenth aspect and the foregoing implementations, in some possible implementations, the to-be-transmitted message includes a third message set and a fourth message set, and each message set includes at least one message. In addition, a destination address of each message in the third message set is first reception user equipment, and a destination address of each message in the fourth message set is second reception user equipment. The preset SR configuration information includes a third SR configuration information set and a fourth SR configuration information set, and each SR configuration information set includes at least one piece of SR configuration information. Any piece of SR configuration information in the third SR configuration information set is associated with each message in the third message set, and any piece of SR configuration information in the fourth SR configuration information set is associated with each message in the fourth message set.

With reference to the tenth aspect and the foregoing implementations, in some possible implementations, the SR configuration information further includes indication information indicating whether the first SR resource can be used to send the SR to the network device.

With reference to the tenth aspect and the foregoing implementations, in some possible implementations, the to-be-transmitted message includes at least one of a PC5 radio resource control PC5-RRC message, an unprotected PC5 signalingingPC5-S message, a PC5-S message establishing PC5-S security, and a protected PC5-S message.

With reference to the tenth aspect and the foregoing implementations, in some possible implementations, the SR configuration information includes an SR identifier ID.

According to an eleventh aspect, a communications apparatus is provided. The communications apparatus has functions of implementing the transmission user equipment in the method designs of the first aspect, the second aspect, and the ninth aspect. The functions may be implemented by hardware, or may be implemented by hardware by executing corresponding software. The hardware or the software includes one or more units corresponding to the foregoing functions.

According to a twelfth aspect, a communications apparatus is provided. The communications apparatus has functions of implementing the network device (for example, a base station) in the method designs of the third aspect, the fourth aspect, and the tenth aspect. The functions may be implemented by hardware, or may be implemented by hardware by executing corresponding software. The hardware or the software includes one or more units corresponding to the foregoing functions.

According to a thirteenth aspect, a terminal device is provided. The terminal device includes a transceiver and a processor. Optionally, the terminal device further includes a memory. The processor is configured to control the transceiver to send and receive a signal. The memory is configured to store a computer program. The processor is configured to invoke the computer program from the memory and run the computer program, to enable the terminal device to perform the method according to any one of the possible implementations of the first aspect, the third aspect, and the fifth aspect.

According to a fourteenth aspect, a network device is provided. The network device includes a transceiver and a processor. Optionally, the network device further includes a memory. The processor is configured to control the transceiver to send and receive a signal. The memory is configured to store a computer program. The processor is configured to invoke the computer program from the memory and run the computer program, to enable the network device to perform the method according to any one of the possible implementations of the third aspect, the fourth aspect, and the tenth aspect.

According to a fifteenth aspect, a communications system is provided. The system includes the transmission user equipment according to the fifth aspect or the sixth aspect and the network device according to the seventh aspect or the eighth aspect; or the system includes the transmission user equipment according to the ninth aspect and the network device according to the tenth aspect; or the system includes the communications apparatus according to the eleventh aspect and the communications apparatus according to the twelfth aspect; or the system includes the terminal device according to the thirteenth aspect and the network device according to the fourteenth aspect.

According to a sixteenth aspect, a communications apparatus is provided. The communications apparatus may be the transmission user equipment in the foregoing method designs, or a chip disposed in the transmission user equipment. The communications apparatus includes a processor. The processor is coupled to a memory, and may be configured to execute instructions in the memory, to implement the method performed by the transmission user equipment in any one of the foregoing possible implementations. Optionally, the communications apparatus further includes the memory. Optionally, the communications apparatus further includes a communications interface, and the processor is coupled to the communications interface.

When the communications apparatus is the transmission user equipment, the communications interface may be a transceiver or an input/output interface.

When the communications apparatus is the chip disposed in the transmission user equipment, the communications interface may be an input/output interface.

Optionally, the transceiver may be a transceiver circuit. Optionally, the input/output interface may be an input/output circuit.

According to a seventeenth aspect, a communications apparatus is provided. The communications apparatus may be the network device in the foregoing method designs, or a chip disposed in the network device. The communications apparatus includes a processor. The processor is coupled to a memory, and may be configured to execute instructions in the memory, to implement the method performed by the network device in any one of the foregoing possible implementations. Optionally, the communications apparatus further includes the memory. Optionally, the communications apparatus further includes a communications interface, and the processor is coupled to the communications interface.

When the communications apparatus is the network device, the communications interface may be a transceiver or an input/output interface.

When the communications apparatus is the chip disposed in the network device, the communications interface may be an input/output interface.

Optionally, the transceiver may be a transceiver circuit. Optionally, the input/output interface may be an input/output circuit.

According to an eighteenth aspect, a computer program product is provided. The computer program product includes computer program code, and when the computer program code is run on a computer, the computer is enabled to perform the methods according to the foregoing aspects.

According to a nineteenth aspect, a computer-readable storage medium is provided. The computer-readable storage medium stores program code, and when the computer program code is run on a computer, the computer is enabled to perform the methods according to the foregoing aspects.

### BRIEF DESCRIPTION OF DRAWINGS

FIG. 1 is a schematic diagram of a wireless communications system applicable to an embodiment of this application;
FIG. 2 is a schematic diagram of communication between UE and a base station.
FIG. 3 is a schematic interaction diagram of a resource determining method according to an embodiment of this application;
FIG. 4 is a schematic interaction diagram of another resource determining method according to an embodiment of this application;
FIG. 5 is a schematic diagram of a resource determining transmission apparatus according to an embodiment of this application;
FIG. 6 is a schematic block diagram of another resource determining transmission apparatus according to an embodiment of this application;
FIG. 7 is a schematic block diagram of another resource determining transmission apparatus according to an embodiment of this application; and
FIG. 8 is a schematic block diagram of another resource determining transmission apparatus according to an embodiment of this application.

### DESCRIPTION OF EMBODIMENTS

The following describes technical solutions of this application with reference to accompanying drawings.

The technical solutions in embodiments of this application may be applied to various communications systems, for example, a long term evolution (long term evolution, LTE) system, an LTE frequency division duplex (frequency division duplex, FDD) system, an LTE time division duplex (time division duplex, TDD) system, a fifth generation (5th generation, 5G) mobile communications system or a new radio (new radio, NR) communications system, and a future mobile communications system.

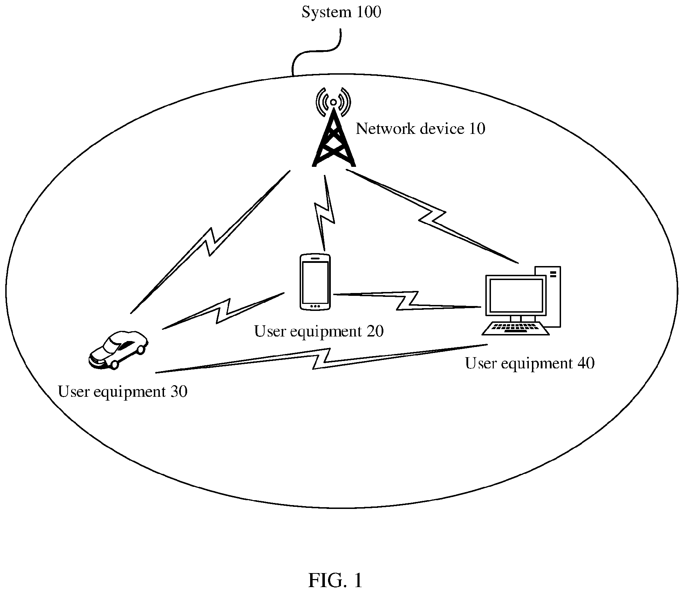

FIG. 1 is a schematic diagram of a wireless communications system 100 applicable to an embodiment of this application. As shown in FIG. 1, the wireless communications system 100 may include one or more network devices, for example, a network device 10 shown in FIG. 1. The wireless communications system 100 may further include one or more user equipments (user equipment, UE), for example, user equipment 20, user equipment 30, and user equipment 40 shown in FIG. 1.

It should be understood that FIG. 1 is merely a schematic diagram. The communications system may further include another network device, for example, may further include a core network device, a wireless relay device, and a wireless backhaul device, which are not drawn in FIG. 1. A quantity of network devices and a quantity of user equipments included in the mobile communications system are not limited in this embodiment of this application.

In the mobile communications system 100, the user equipment 20, the user equipment 30, and the user equipment 40 in this embodiment of this application each may also be referred to as a terminal, a terminal device, a mobile station (mobile station, MS), a mobile terminal (mobile terminal, MT), or the like. The user equipment in this embodiment of this application may be a mobile phone (mobile phone), a tablet computer (Pad), or a computer having a wireless transceiver function, or may be a wireless terminal used in scenarios such as a virtual reality (virtual reality, VR), an augmented reality (augmented reality, AR), industrial control (industrial control), self-driving (self-driving), remote medical (remote medical), a smart grid (smart grid), transportation safety (transportation safety), a smart city (smart city), and a smart home (smart home). In this application, the foregoing user equipment and a chip that can be applied to the foregoing user equipment are collectively referred to as user equipment. It should be understood that a specific technology used by and a specific device form of the user equipment are not limited in this embodiment of this application.

The network device 10 in this embodiment of this application may be a device configured to communicate with the user equipment. The network device may be a base station, an evolved NodeB (evolved NodeB, eNB), a home base station, an access point (access point, AP) in a wireless fidelity (wireless fidelity, Wi-Fi) system, a wireless relay node, a wireless backhaul node, a transmission point (transmission point, TP) or a transmission reception point (transmission reception point, TRP), or the like, or may be a gNB in an NR system, or may be a component or a part of a device that forms a base station, for example, a central unit (central unit, CU), a distributed unit (distributed unit, DU), or a baseband unit (baseband unit, BBU). It should be understood that a specific technology used by and a specific device form of the network device are not limited in this embodiment of this application. In this application, the network device may be the network device, or may be a chip applied to the network device to complete a wireless communication processing function.

It should be understood that, in this embodiment of this application, the user equipment or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, embodiments of this application impose no special limitation on a specific structure of an execution body of a method provided in embodiments of this application, provided that a program that records code of the method provided in embodiments of this application can be run to perform communication according to the method provided in embodiments of this application. For example, the method provided in embodiments of this application may be performed by the user equipment or the network device, or may be performed by a function module that is in the user equipment or the network device and that can invoke and execute a program.

It should be further understood that the resource determining method provided in embodiments of this application may be applied to communication between the user equipment and the network device, for example, uplink communication between the user equipment 20, the user equipment 30, the user equipment 40, and the network device 10, and may be further applied to communication between the user equipment 20, the user equipment 30, and the user equipment 40, for example, sidelink communication. In a vehicle-to-everything (vehicle-to-everything, V2X) service, no limitation is imposed on communication between the user equipment 20 and the user equipment 30 and the like in this application.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable storage medium may include but is not limited to a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory (for example, an erasable programmable read-only memory (erasable programmable read-only memory, EPROM), a card, a stick, or a key drive).

In addition, various storage media described in this specification may represent one or more devices and/or other machine-readable media that are configured to store information. The term "machine-readable storage media" may include but is not limited to a radio channel, and various other media that can store, include, and/or carry instructions and/or data.

It should be understood that division of manners, cases, types, and embodiments in embodiments of this application are only for ease of description, but should not constitute any special limitation, and features in various manners, types, cases, and embodiments may be combined when there is no contradiction.

It should be further understood that terms "first", "second", and "third" in embodiments of this application are merely used for distinguishing, and should not be construed as any limitation on this application. For example, a "first resource" and a "second resource" in embodiments of this application represent resources for transmitting information between a base station and user equipment.

It should be further understood that sequence numbers of the foregoing processes do not mean execution sequences in various embodiments of this application. The execution sequences of the processes should be determined according to functions and internal logic of the processes, and should not be construed as any limitation on implementation processes of embodiments of this application.

It should be further noted that, in embodiments of this application, "preset", "predefine", or the like may be implemented by pre-storing corresponding code, a table, or another manner that can be used to indicate related information in a device (for example, including user equipment and a network device), and a specific implementation thereof is not limited in this application. For example, the specific implementation is a preset rule or a preset constant in embodiments of this application.

It should be further noted that a term "and/or" describes an association relationship between associated objects and represents that three relationships may exist. For example, A and/or B may represent the following three cases: Only A exists, both A and B exist, and only B exists. A character "/" generally indicates an "or" relationship between the associated objects. The following describes in detail the technical solutions provided in this application with reference to the accompanying drawings.

In the following embodiments, without loss of generality, a base station serves as a network device, and sidelink communication between at least two user equipments and uplink communication between the user equipment and the base station are used as examples to specifically describe the resource determining method in this application. The user equipment may be any user equipment that is in a wireless communications system and that has a wireless connection relationship with one or more network devices. It can be understood that any user equipment in the wireless communications system may implement wireless communication based on a same technical solution. This is not limited in this application.

To facilitate understanding of embodiments of this application, the following briefly describes several concepts in this application.

### 1. Uplink channel

The uplink channel is a channel that may be used to carry uplink control information and/or uplink data. For example, the uplink channel may include a physical uplink control channel (physical uplink control channel, PUCCH) and a physical uplink shared channel (physical uplink shared channel, PUSCH) that are defined in an LTE protocol or an NR protocol, and another uplink channel that has the foregoing functions and that is defined as a network evolves.

### 2. Sidelink shared channel (sidelink shared channel, SL-SCH)

The SSCH may be used to send sidelink data and the like.

Optionally, in V2X, data transmitted on an SL may be carried on a data radio bearer (Data Radio Bearer, DRB) of the SL for transmission, which is referred to as an "SL DRB".

### 3. Sidelink control channel (sidelink control channel, SCCH)

The SCCH may be used to carry signaling, such as sidelink control information and/or sidelink feedback control information.

Optionally, in a unicast transmission scenario, signaling transmitted on the SCCH may include a PC5 radio resource control (PC5 radio resource control, PC5-RRC) message and a PC5 signaling (PC5-signaling, PC5-S) message. The signaling transmitted on an SL may be carried on a signaling radio bearer (signaling radio bearer, SRB) of the SL, which is referred to as an "SL SRB".

For the PC5-RRC message, one SL SRB is introduced to transmit the PC5-RRC message.

For the PC5-S message, three SL SRBs are introduced to respectively transmit the following:
1. an unprotected PC5-S message (unprotected PC5-S message), for example, a direct communication request (direct communication request) message;
2. a PC5-S message establishing PC5-S security (PC5-S message establishing PC5-S security), for example, a direct security mode command (direct security mode command) message and a direct security mode complete (direct security mode complete) message; and
3. a protected PC5-S message (protected PC5-S message).

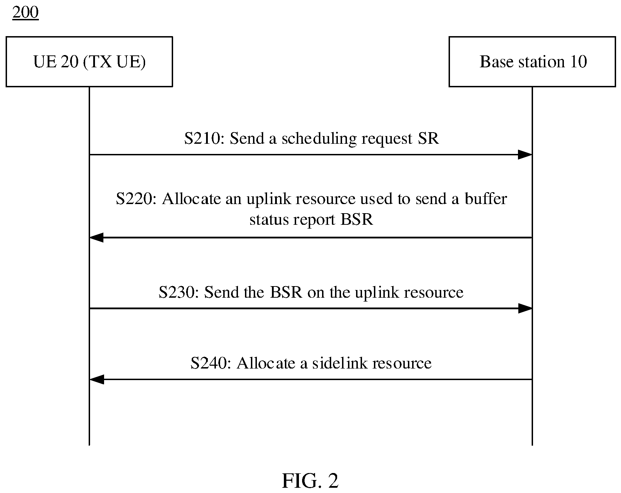

The following describes the resource determining method with reference to the accompanying drawings. FIG. 2 is a schematic diagram of communication between UE 20 and a base station 10. In a D2D communication manner, the user equipment may include TX UE and RX UE, and the TX UE and the RX UE communicate with each other through a sidelink SL allocated by the base station, for example, communication between the UE 20 and the UE 30 in FIG. 1.

Specifically, when the UE 20 needs to send data to the UE 30, in this process, the UE 20 may serve as TX UE, and the UE 30 may serve as RX UE. After receiving data buffer, the UE 20 may send a buffer status report (buffer status report, BSR) to the base station 10, and notify the base station 10 of an amount of to-be-sent data included in the buffer by using the BSR. The base station 10 may determine, based on the amount of to-be-sent data in the BSR, a quantity of sidelink resources (SL grant) to be allocated to the UE 20.

In this process, when the UE 20 triggers the BSR, if there is no available uplink resource (UL grant) currently, the uplink resource is used by the UE 20 to send the BSR to the base station 10. The UE 20 first sends a scheduling request (scheduling request, SR) to the base station 10, to notify the base station 10 that there is data that needs to be sent. Based on the foregoing process, as shown in FIG. 2, the process 200 may include the following steps.

S210: The UE 20 sends the scheduling request SR to the base station 10.

It should be understood that the SR may be used to notify the base station 10 that the UE 20 has data that needs to be sent to the UE 30, and the SR may be 1 bit indication information, and does not carry information about an amount of to-be-sent data. After receiving the SR, the base station 10 may learn that the UE 20 currently has data that needs to be sent to the UE 30, but the base station 10 does not learn of a current amount of to-be-sent data.

S220: The base station 10 allocates, to the UE 20, an uplink resource used to send the BSR.

Specifically, after receiving the SR, the base station 10 may allocate, to the UE, an uplink resource that is at least sufficient for sending the BSR. The UE 20 may send the BSR to the base station 10 by using the uplink resource. It should be understood that the BSR may include the information about the amount of to-be-sent data.

S230: The UE 20 sends the BSR to the base station 10 by using the uplink resource.

S240: The base station 10 allocates an available sidelink resource (SL grant) to the UE 20 based on the amount of to-be-sent data.

Specifically, after receiving the BSR, the base station 10 determines the amount of data to be sent by the UE 20 to the UE 30, and determines, based on the amount of to-be-sent data, the quantity of sidelink resources (SL grant) to be allocated to the UE 20.

In S210, the uplink resource used by the UE 20 to send the SR to the base station 10 is referred to as an "SR resource", and the UE 20 may send the SR to the base station 10 by using the SR resource. Before this, the UE 20 may determine an SR resource by using SR configuration information. The base station 10 may configure SR configuration information (schedulingRequestConfig) for the UE 20. The SR configuration information may specifically include an SR identifier ID (schedulingRequestID), an SR sending prohibit timer (SR-ProhibitTimer), a maximum quantity of SR retransmissions (SR-TransMax), and the like.

In addition, the base station 10 may further configure SR resource configuration information (SchedulingRequestResourceConfig) for the UE 20. The SR resource configuration information may specifically include an SR ID (schedulingRequestID), an SR resource ID (schedulingRequestResourceId), an SR periodicity and offset (periodicityAndOffset), and the like.

For an SL DRB (or a logical channel), a corresponding SR ID may be indicated, so that the UE can request a resource from a network device by sending an SR. Therefore, the UE 20 may determine an SR resource ID by using a correspondence between an SR ID and an SR resource ID in the SR resource configuration information, so as to determine an SR resource corresponding to the SR resource ID. Further, the UE 20 may send, based on other configuration information in an SR configuration corresponding to the SR ID, the SR to the base station 10 by using the SR resource corresponding to the SR ID, so as to notify the base station 10 that the UE 20 has data that needs to be sent to the UE 30.

It should be understood that one UE may have a plurality of SR configurations and correspond to a plurality of SR IDs, or may have a plurality of SR resource configurations, and one or more logical channels of one UE may correspond to one SR configuration or one SR resource configuration. When there is data buffered on a logical channel, the BSR is triggered, then the SR is triggered, and the UE 20 may send the SR to the base station 10 based on other configuration information in an SR configuration of the logical channel by using an SR resource corresponding to the SR configuration.

In a possible case, the UE 20 (TX UE) may send the SR to the base station 10. If the base station 10 does not allocate an available SR resource to the UE 20, the UE 20 needs to trigger a random access (random access) process to request an SR resource when there is no available UL. However, a manner of requesting an uplink resource from the base station through contention-based random access to send the BSR increases signaling overheads, power consumption, and a delay.

In addition, in an existing process in which the base station 10 configures an SL SRB for the UE 20, an SR resource and SR resource configuration information are not included. To be specific, the UE 20 cannot determine an uplink resource for sending an SR to the base station 10, that is, cannot further request an SL grant by sending a BSR to the base station 10.

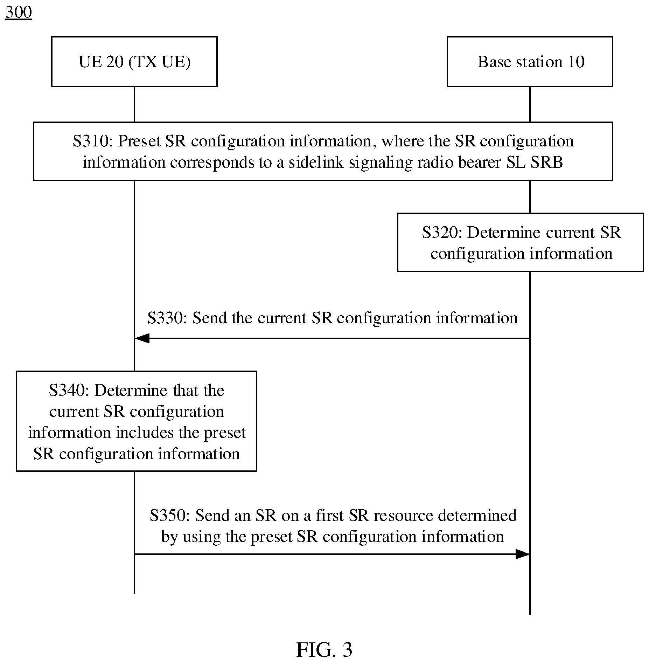

FIG. 3 is a schematic interaction diagram of a resource determining method 300 according to an embodiment of this application. The following describes steps of the method 300 in detail. It should be understood that the method 300 may be applied to a communications system including transmission user equipment UE 20 (TX UE), at least one reception user equipment (RX UE), a network device (for example, a base station 10), and the like, for example, the communications system 100 shown in FIG. 1. The UE 20 may serve as transmission user equipment, and the UE 30 and the UE 40 each may serve as reception user equipment.

It should be further understood that, in this embodiment of this application, the method 300 is described by using an example in which the method 300 is performed by the UE 20 and the base station 10 (for example, a primary base station and a secondary base station). By way of example, and not limitation, the method 300 may alternatively be performed by a chip applied to the UE and a chip applied to the base station.

It should be further understood that the resource determining method provided in this embodiment of this application is not limited to any network connection architecture, for example, is not limited to any possible network connection form enumerated in FIG. 1. This is not limited in this application.

Optionally, when the UE 20 has no available uplink (uplink) resource, and the UE 20 buffers a to-be-transmitted message to be sent to another UE (for example, the UE 30 or the UE 40), an SR resource may be determined for the UE 20 by using the resource determining method in this embodiment of this application, so as to send an SR to the base station 10, so that the base station 10 can configure, for the UE 20, an uplink resource used to send a BSR, and further allocate a sidelink (SL) resource to the UE 20 and the UE 30.

It should be understood that the "to-be-transmitted message" in this embodiment of this application may be one or more of the foregoing enumerated PC5-RRC message and PC5-S message, or the "to-be-transmitted message" in this embodiment of this application may be a message carried on an SL SRB.

The resource determining method 300 in this embodiment of this application may include the following steps:
S310: Configure preset SR configuration information for the base station 10 and the UE 20, where the SR configuration information corresponds to a sidelink signaling radio bearer SL SRB.
S320: The base station 10 determines current SR configuration information.
S330: The base station 10 sends the current SR configuration information to the UE 20.
S340: The UE 20 determines that the current SR configuration information includes the preset SR configuration information.
S350: The UE 20 sends an SR to the base station 10 on a first SR resource determined by using the preset SR configuration information.

It should be understood that, when there is data buffered on a sidelink data radio bearer SL DRB, the UE 20 may also send an SR to the base station 10, to further trigger a BSR. A difference from a manner of determining an SR resource for an SL DRB in the conventional technology is that, in this embodiment of this application, the SR configuration information is associated with a sidelink signaling radio bearer SL SRB, that is, an SR resource is requested for a to-be-transmitted message carried on the SL SRB.

It should be further understood that, that the SR configuration information corresponds to an SL SRB may mean that one SL SRB corresponds to one piece of SR configuration information, or one SL SRB corresponds to a plurality of pieces of SR configuration information, or one piece of SR configuration information corresponds to a plurality of SL SRBs. This is not limited in this embodiment of this application.

In a possible implementation, the preset SR configuration information may be understood as SR configuration information that is specified in a protocol. The base station 10 and the UE 20 may reach a consensus, and both learn of specific preset SR configuration information included in the preset SR configuration information. It should be understood that one or more pieces of preset SR configuration information are specified in the protocol, and an amount of preset SR configuration information is not limited in this embodiment of this application.

Optionally, the preset SR configuration information may be included in a dedicated configuration instruction of the base station 10 for an SCCH. The base station 10 configures the preset SR configuration information for the UE 20 when configuring the SCCH. In this case, the first SR resource may be understood as an SR resource determined by using the preset SR configuration information.

For example, in the dedicated configuration instruction of the SCCH, a parameter may be added to indicate the SR configuration information, for example, "schedulingRequest ID=X", where X may be any value in a set {X, Y, Z, M, N...}. Alternatively, the parameter may indicate a plurality of values in the set {X, Y, Z, M, N...}. For example, schedulingRequestID=X, Y, or Z.

Specifically, the to-be-transmitted message buffered on the SCCH described above may include a PC5-RRC message and three different types of PC5-S messages, and different messages may be carried on different SL SRBs. Therefore, there may be a plurality of configuration manners for different message types below.

### Manner 1

An SL SRB that carries the PC5-RRC message and an SL SRB that carries the PC5-S message reuse one piece of SR configuration information, that is, correspond to one SR configuration ID. In other words, same preset SR configuration information is configured for the SL SRB corresponding to the PC5-RRC message and the SL SRBs corresponding to the three different types of PC5-S messages.

For example, Table 1 shows a dedicated configuration instruction of an SCCH corresponding to the PC5-RRC message. The dedicated configuration instruction of the SCCH may include information such as packet data convergence protocol (packet data convergence protocol, PDCP) configuration information, reordering information, a PDCP sequence number, radio link control (radio link control, RLC) layer configuration information, serial number (serial number, SN) field length information, reconfiguration information, a logical channel identity (logical channel identity), media access control (media access control, MAC) layer configuration information, priority information, a prioritized bit rate, and a logical channel group.

In this embodiment of this application, the parameter schedulingRequestID may be added, for example, "schedulingRequestID=10". After "schedulingRequestID=10" is added to the dedicated configuration instruction of the SCCH corresponding to the PC5-RRC message, refer to Table 1. The parameter information may specify in the protocol that the UE 20 and the base station 10 may consider "schedulingRequestID=10" corresponding to the PC5-RRC message by default, and then the UE 20 searches for an SR resource ID based on "schedulingRequestID=10", and further sends the SR to the base station 10 on an SR resource determined by using the SR resource ID. Correspondingly, the base station 10 may receive, on the SR resource determined by using the SR resource ID, the SR sent by the UE 20.

**Table 1**

| Name | Value | Semantics description | Ver |
|---|---|---|---|
| PDCP configuration (PDCP configuration) | | | |
| >t-Reordering (reordering) | Undefined | Selected by the reception UE, up to UE implementation | |
| >pdcp-SN-Size (PDCP sequence number) | 18 | | |
| RLC configuration (RLC configuration) | | | |
| >sn-FieldLength (SN field length) | 12 | | |
| >t-Reassembly (reconfiguration information) | Undefined | Selected by the reception UE, up to UE implementation | |
| >logical Channel Identity (logical channel ID) | 0 | | |
| MAC configuration | | | |
| >priority | 1 | | |
| >prioritised Bit Rate (prioritized bit rate) | infinity | | |
| >logical Channel Group (logical channel group) | 0 | | |
| >scheduling Request ID (SR ID) | 10 | | |

Alternatively, for a dedicated configuration instruction of an SCCH corresponding to the PC5-S message shown in Table 2, especially for an unprotected PC5-S message (unprotected PC5-S message) such as a direct communication request (Direct Communication Request) message, after "schedulingRequestID=10" is added on the basis of the dedicated configuration instruction of the SCCH, refer to Table 2. The parameter information may specify in the protocol that the UE 20 and the base station 10 may consider "schedulingRequestID=10" corresponding to the PC5-S message by default, and then the UE 20 searches for the SR resource ID based on "schedulingRequestID=10", and further sends the SR to the base station 10 on an SR resource determined by using the SR resource ID. Correspondingly, the base station 10 may receive, on the SR resource determined by using the SR resource ID, the SR sent by the UE 20.

**Table 2**

| Name | Value | Semantics description | Ver |
|---|---|---|---|
| PDCP configuration (PDCP configuration) | | | |
| >t-Reordering (reordering) | Undefined | Selected by the reception UE, up to UE implementation | |
| >pdcp-SN-Size (PDCP sequence number) | 18 | | |
| RLC configuration (RLC configuration) | | | |
| >sn-FieldLength (SN field length) | 12 | | |
| >t-Reassembly (reconfiguration information) | Undefined | Selected by the reception UE, up to UE implementation | |
| >logical Channel Identity (logical channel ID) | 0 | | |
| MAC configuration | | | |
| >priority | 1 | | |
| >prioritised Bit Rate (prioritized bit rate) | infinity | | |
| >logical Channel Group (logical channel group) | 0 | | |
| >scheduling Request ID (SR ID) | 10 | | |

Alternatively, for a PC5-S message establishing PC5-S security (PC5-S message establishing PC5-S security) such as a direct security mode command (Direct Security Mode Command) message and a direct security mode complete (Direct Security Mode Complete) message, after "schedulingRequestID=10" is added to a dedicated configuration instruction of a corresponding SCCH, refer to Table 3. The parameter information may specify in the protocol that the UE 20 and the base station 10 may consider "schedulingRequestID=10" corresponding to the PC5-S message by default, and then the UE 20 searches for the SR resource ID based on "schedulingRequestID=10", and further sends the SR to the base station 10 on an SR resource determined by using the SR resource ID. Correspondingly, the base station 10 may receive, on the SR resource determined by using the SR resource ID, the SR sent by the UE 20.

**Table 3**

| Name | Value | Semantics description | Ver |
|---|---|---|---|
| PDCP configuration (PDCP configuration) | | | |
| >t-Reordering (reordering) | Undefined | Selected by the reception UE, up to UE implementation | |
| >pdcp-SN-Size (PDCP sequence number) | 12 | | |
| RLC configuration (RLC configuration) | | | |
| >sn-FieldLength (SN field length) | 12 | | |
| >t-Reassembly (reconfiguration information) | Undefined | Selected by the reception UE, up to UE implementation | |
| >logical Channel Identity (logical channel ID) | 1 | | |
| MAC configuration | | | |
| >priority | 1 | | |
| >prioritised Bit Rate (prioritized bit rate) | infinity | | |
| >logical Channel Group (logical channel group) | 0 | | |
| >scheduling Request ID (SR ID) | 10 | | |

Alternatively, for a protected PC5-S message (protected PC5-S message), after "schedulingRequestID=10" is added to a dedicated configuration instruction of a corresponding SCCH, refer to Table 4. The parameter information may specify in the protocol that the UE 20 and the base station 10 may consider "schedulingRequestID=10" corresponding to the PC5-S message by default, and then the UE 20 searches for the SR resource ID based on "schedulingRequestID=10", and further sends the SR to the base station 10 on an SR resource determined by using the SR resource ID. Correspondingly, the base station 10 may receive, on the SR resource determined by using the SR resource ID, the SR sent by the UE 20.

**Table 4**

| Name | Value | Semantics description | Ver |
|---|---|---|---|
| PDCP configuration (PDCP configuration) | | | |
| >t-Reordering (reordering) | Undefined | Selected by the reception UE, up to UE implementation | |
| >pdcp-SN-Size (PDCP sequence number) | 12 | | |
| RLC configuration (RLC configuration) | | | |
| >sn-FieldLength (SN field length) | 12 | | |
| >t-Reassembly (reconfiguration information) | Undefined | Selected by the reception UE, up to UE implementation | |
| >logical Channel Identity (logical channel ID) | 2 | | |
| MAC configuration | | | |
| >priority | 1 | | |
| >prioritised Bit Rate (prioritized bit rate) | infinity | | |
| >logical Channel Group (logical channel group) | 0 | | |
| >scheduling Request ID (SR ID) | 10 | | |

According to the foregoing configuration process in Manner 1, the four SL SRBs may reuse one piece of SR configuration information, that is, the four SL SRBs corresponding to one SR configuration ID share one SR resource.

### Manner 2

An SL SRB that carries the PC5-RRC message and SL SRBs that carry the three types of PC5-S messages may be configured with different SR configuration information, that is, correspond to different SR resource. In other words, different SR configuration IDs are configured for an SCCH corresponding to the PC5-RRC message and SCCHs corresponding to the three different types of PC5-S messages.

For example, the SR configuration information of the SL SRB that carries the PC5-RRC message is "schedulingRequestID=X", and the SR configuration information of the SL SRB that carries the PC5-S message is "schedulingRequestID=Y" .

Specifically, in the preset SR configuration information {X, Y, Z, M, N...}, any "schedulingRequestID=X" is selected, and the SR configuration information of the SL SRB that carries the PC5-RRC message is configured as "schedulingRequestID=X". Alternatively, the parameter may indicate a plurality of values in the set {X, Y, Z, M, N...}. For example, schedulingRequestID=X or Y. In addition, any "schedulingRequestID=Y" is selected, and the SR configuration information of the SL SRBs that carry the three types of PC5-S messages is configured as "schedulingRequestID=Y". Alternatively, the parameter may indicate a plurality of values in the set {X, Y, Z, M, N...}. For example, schedulingRequestID=Z or M. Therefore, the SL SRB that carries the PC5-RRC message and the SL SRBs that carry the three types of PC5-S messages correspond to different SR resources.

According to the foregoing configuration process in Manner 2, the four SL SRBs may be associated with two different types of SR configuration information, so that to-be-transmitted messages of different message types correspond to different SR resources.

### Method 3

Different SR configuration information may be configured for an SL SRB that carries the PC5-RRC message and corresponding SL SRBs that carry the three types of PC5-S messages. In other words, all to-be-transmitted messages correspond to different SR resources.

For example, the SL SRB corresponding to the PC5-RRC message is associated with "schedulingRequestID=X", and the SL SRB corresponding to the PC5-S message may be associated with "schedulingRequestID=Y, Z, or M".

Specifically, in the preset SR configuration information {X, Y, Z, M, N...}, any "schedulingRequestID=X" is selected, and the SR configuration information of the SL SRB that carries the PC5-RRC message is configured as "schedulingRequestID=X"; any "schedulingRequestID=Y" is selected, and the SR configuration information of the SL SRB that carries the unprotected PC5-S message (unprotected PC5-S message) is configured as "schedulingRequestID=Y"; any "schedulingRequestID=Z" is selected, and the SR configuration information of the SL SRB that carries the PC5-S message establishing PC5-S security (PC5-S message establishing PC5-S security) is configured as "schedulingRequestID=Z"; and any "schedulingRequestID=M" is selected, and the SR configuration information of the SL SRB that carries the protected PC5-S message (protected PC5-S message) is configured as "schedulingRequestID=M". Similar to Manner 1 or Manner 2, preset SR configuration information corresponding to each to-be-transmitted message may indicate a plurality of values in the set {X, Y, Z, M, N...}.

According to the foregoing configuration process in Manner 3, the four SL SRBs may be associated with four different types of SR configuration information, so that all to-be-transmitted messages correspond to different SR resources.

It should be understood that, in the foregoing three SR resource configuration manners, the SR configuration information of the four SL SRBs is predefined in a standard, that is, the base station 10 does not need to configure an SL SRB parameter for the UE 20 by using system information or dedicated RRC signaling.

It should be understood that S320 to S340 are optional steps in the foregoing resource determining method 300. For example, the method 300 may include processes of S310 and S350, or the method 300 may include processes of S310, S320, S330, S340, and S350.

Optionally, the SR configuration information is preset in the standard in the method 300, and the UE 20 may directly send the SR to the base station 10 by using the first SR resource determined by using the preset SR configuration information.

Alternatively, after the SR configuration information is preset in the standard in the method 300, the base station 10 may further send the current SR configuration information to the UE 20, and the UE 20 determines whether the current SR configuration information includes the preset SR configuration information, or the UE 20 determines whether the current SR configuration information is the preset SR configuration information. When the current SR configuration information includes the preset SR configuration information, or when the current SR configuration information is the preset SR configuration information, the UE 20 may directly send the SR to the base station 10 by using the first SR resource determined by using the preset SR configuration information. In other words, all processes of S310, S320, S330, S340, and S350 in the method 300 are performed. In this process, if the base station 10 determines that a dedicated SR resource can be currently configured for the SL SRB of the UE 20, a corresponding SR configuration ID (for example, "SchedulingRequestID=10") is configured in SchedulingRequestConfig, and the UE 20 may send the SR by using the SR resource configured by the base station 10.

Alternatively, when the UE 20 determines that the current SR configuration information does not include the preset SR configuration information, or when the UE 20 determines that the current SR configuration information is not the preset SR configuration information, the UE 20 initiates a random access procedure to the base station 10. In this process, if the base station 10 determines that a dedicated SR resource is not currently configured for the SL SRB of the UE 20, the current SR configuration information is configured as SR configuration information other than the preset SR configuration information in SchedulingRequestConfig, for example, "SchedulingRequestID=1". If the UE 20 determines, based on "SchedulingRequestID=1", that the SR configuration information is not the preset SR configuration information in the standard, the UE 20 cannot send the SR by using an SR resource corresponding to "SchedulingRequestID=10", but can send a random access request to the base station 10 to obtain an uplink resource.

Optionally, the SR configuration information (schedulingRequestConfig) may include at least one piece of information such as an SR identifier ID (schedulingRequestID), an SR sending prohibit timer (SR-ProhibitTimer), and a maximum quantity of SR retransmissions (SR-TransMax).

In addition to the SR configuration information (schedulingRequestConfig), the base station 10 may further configure SR resource configuration information (SchedulingRequestResourceConfig) for the UE 20. The SR resource configuration information may include an SR ID (schedulingRequestID), an SR resource ID (schedulingRequestResourceID), an SR periodicity and offset (periodicityAndOffset), and the like.

Therefore, after receiving the SR configuration information sent by the base station 10, the UE 20 may determine an SR ID. The SR ID may correspond to an SR resource ID. Then, the UE 20 further determines an SR resource based on the SR resource ID, for example, the "first SR resource" in this embodiment of this application. In other words, the first SR resource is an uplink resource used by the UE 20 to finally send the SR to the base station 10.

A difference from a manner in which the preset SR configuration information is included in the dedicated configuration instruction of the base station 10 for the SCCH is: Optionally, it may be further specified that one or more sidelink radio bearer configuration indexes (SLRB-Uu-ConfigIndex) correspond to a sidelink signaling radio bearer SL SRB, or one or more sidelink radio bearer configurations correspond to a sidelink signaling radio bearer SL SRB, or one or more sidelink data radio bearer configuration indexes correspond to a sidelink signaling radio bearer SL SRB, or one or more sidelink data radio bearer configurations correspond to a sidelink signaling radio bearer SL SRB.

For example, it is specified that SLRB-Uu-ConfigIndex=X, where X may be any value in the set {X, Y, Z, M, N...}; or it is specified that SLRB-Uu-ConfigIndex=X, Y, or Z, where X, Y, and Z each may be any value in the set {X, Y, Z, M, N...}. For example, it is specified that SLRB-Uu-ConfigIndex=X. In sidelink bearer configuration signaling (SL-RLC-BearerConfig), if "SLRB-Uu-ConfigIndex=X" is configured, it indicates that the configured sidelink bearer configuration corresponds to an SL SRB. The sidelink bearer configuration signaling includes the SR configuration information. For example, the sidelink bearer configuration signaling includes a sidelink logical channel configuration (sl-MAC-LogicalChannelConfig/ SL-LogicalChannelConfig), and the sidelink logical channel configuration includes an SR ID. Therefore, the UE 20 may determine, by using the specified "SLRB-Uu-ConfigIndex=X", "SLRB-Uu-ConfigIndex=X" included in the sidelink bearer configuration signaling, and the SR configuration information included in the sidelink bearer configuration signaling, an SR configuration corresponding to the SL SRB, that is, an SR resource. Specifically, there are a plurality of manners of configuring a sidelink radio bearer configuration index and an SL SRB, and there are a plurality of configuration manners for different message types, as described in Manner 1, Manner 2, and Manner 3. Details are not described herein again.

Optionally, the SR configuration information is preset in the standard in the method 300, and the UE 20 may directly send the SR to the base station 10 by using the first SR resource determined by using the preset SR configuration information.

Alternatively, after the SR configuration information is preset in the standard in the method 300, the base station 10 may further send the current SR configuration information to the UE 20, and the UE 20 determines whether the current SR configuration information includes the preset SR configuration information, or the UE 20 determines whether the current SR configuration information is the preset SR configuration information. When the current SR configuration information includes the preset SR configuration information, or when the current SR configuration information is the preset SR configuration information, the UE 20 may directly send the SR to the base station 10 by using the first SR resource determined by using the preset SR configuration information. In other words, all processes of S310, S320, S330, S340, and S350 in the method 300 are performed. In this process, if the base station 10 determines that a dedicated SR resource can be currently configured for the SL SRB of the UE 20, a corresponding SR configuration ID (for example, "SLRB-Uu-ConfigIndex=10") is configured in SL-RLC-BearerConfig, and the UE 20 may send the SR by using the SR resource configured by the base station 10.

Alternatively, when the UE 20 determines that the current SR configuration information does not include the preset SR configuration information, or when the UE 20 determines that the current SR configuration information is not the preset SR configuration information, the UE 20 initiates a random access procedure to the base station 10. In this process, if the base station 10 determines that a dedicated SR resource is not currently configured for the SL SRB of the UE 20, the current SR configuration information is configured as SR configuration information other than the preset SR configuration information in SL-RLC-BearerConfig, for example, "SLRB-Uu-ConfigIndex=1". If the UE 20 determines, based on "SLRB-Uu-ConfigIndex=1", that the SR configuration information is not the preset SR configuration information in the standard, the UE 20 cannot send the SR by using an SR resource corresponding to "SLRB-Uu-ConfigIndex=10", but can send a random access request to the base station 10 to obtain an uplink resource.

Optionally, the SR configuration information (schedulingRequestConfig) may include at least one piece of information such as an SR identifier ID (schedulingRequestID), an SR sending prohibit timer (SR-ProhibitTimer), and a maximum quantity of SR retransmissions (SR-TransMax).

In addition to the SR configuration information (schedulingRequestConfig), the base station 10 may further configure SR resource configuration information (SchedulingRequestResourceConfig) for the UE 20. The SR resource configuration information may include an SR ID (schedulingRequestID), an SR resource ID (schedulingRequestResourceID), an SR periodicity and offset (periodicityAndOffset), and the like.

It should be noted that the current SR configuration information sent by the base station 10 to the UE 20 does not include configuration information in the preset SR configuration information; or the current SR configuration information sent by the base station 10 to the UE 20 may include configuration information in the preset SR configuration information. If the current SR configuration information includes the configuration information in the preset SR configuration information, the current SR configuration information sent by the base station 10 may be used, or the configuration information in the preset SR configuration information may be used.

Therefore, after receiving the SR configuration information sent by the base station 10, the UE 20 may determine an SR ID. The SR ID may correspond to an SR resource ID. Then, the UE 20 further determines an SR resource based on the SR resource ID, for example, the "first SR resource" in this embodiment of this application. In other words, the first SR resource is an uplink resource used by the UE 20 to finally send the SR to the base station 10.

In the foregoing technical solution, SR configuration information is preset for a base station and UE in the standard. During specific implementation, the base station may flexibly determine whether a dedicated SR resource is configured for an SL SRB of the UE. When the base station determines that the dedicated SR resource can be configured for the SL SRB of the UE, the base station adds the preset SR configuration information when configuring the SR resource for the UE, so that the UE can send an SR to the base station by using the preset SR resource, to request an uplink resource or an SL resource. This reduces signaling overheads, power consumption of the UE, and an uplink resource obtaining delay.

In another possible implementation, no preset SR configuration information is specified for the base station 10 and the UE 20 in the protocol, and the base station 10 may configure the SR configuration information for the UE 20 according to different methods.

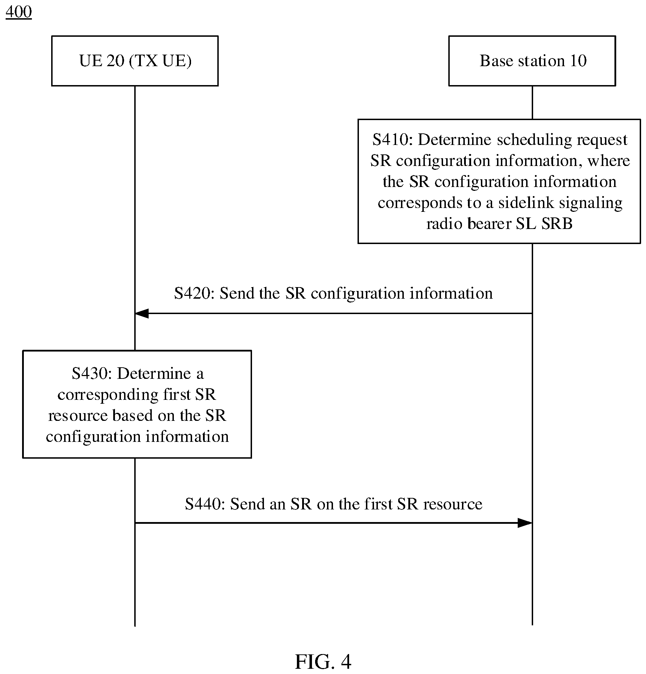

FIG. 4 is a schematic interaction diagram of another resource determining method 400 according to an embodiment of this application. The following describes steps of the method 400 in detail.

It should be understood that the method 400 may be applied to a communications system including transmission user equipment UE 20 (TX UE), at least one reception user equipment (RX UE), a network device (for example, a base station 10), and the like, for example, the communications system 100 shown in FIG. 1. The UE 20 may serve as transmission user equipment, and the UE 30 and the UE 40 each may serve as reception user equipment.

It should be further understood that, in this embodiment of this application, the method 400 is described by using an example in which the method 400 is performed by the UE 20 and the base station 10 (for example, a primary base station and a secondary base station). By way of example, and not limitation, the method 400 may alternatively be performed by a chip applied to the UE and a chip applied to the base station.

It should be further understood that the resource determining method provided in this embodiment of this application is not limited to any network connection architecture, for example, is not limited to any possible network connection form enumerated in FIG. 1. This is not limited in this application.

Optionally, when the UE 20 has no available uplink (uplink) resource, and the UE 20 buffers a to-be-transmitted message to be sent to another UE (for example, the UE 30 or the UE 40), an SR resource may be determined for the UE 20 by using the resource determining method in this embodiment of this application, so as to send an SR to the base station 10, so that the base station 10 can configure, for the UE 20, an uplink resource used to send a BSR, and further allocate a sidelink (SL) resource to the UE 20 and the UE 30.

It should be understood that the "to-be-transmitted message" in this embodiment of this application may be one or more of the foregoing enumerated PC5-RRC message and PC5-S message, or the "to-be-transmitted message" in this embodiment of this application may be a message carried on the SL SRB.

The resource determining method 400 in this embodiment of this application may include the following steps:
S410: The base station 10 determines scheduling request SR configuration information, where the SR configuration information corresponds to a sidelink signaling radio bearer SL SRB.
S420: The base station 10 sends the SR configuration information to the UE 20. Correspondingly, the UE 20 receives the SR configuration information sent by the base station 10.
S430: The UE 20 determines a corresponding first SR resource based on the SR configuration information.
S440: The UE 20 sends an SR to the base station 10 by using the first SR resource. Correspondingly, the base station 10 receives the SR sent by the UE 20 by using the first SR resource.

Optionally, in the method 400, the SR configuration information is configured by the base station 10 for the UE 20, and may be used to schedule data between the base station 10 and the UE 20, and may be further used to schedule data between the UE 20 and another UE (the UE 30 or the UE 40).

In a possible implementation, in a process of determining the SR configuration information, the base station 10 may determine same SR configuration information for all to-be-transmitted messages; or may determine same SR configuration information for to-be-transmitted messages of a same type, and determine different SR configuration information for to-be-transmitted messages of different types; or may determine different SR configuration information for all to-be-transmitted messages; or may determine same SR configuration information for at least two to-be-transmitted messages.

For example, the base station 10 may determine the SR configuration information for the UE 20 in the following manners.

### Manner 4

The base station 10 may determine same SR configuration information for all to-be-transmitted messages. In other words, all SL SRBs corresponding to all the to-be-transmitted messages share one piece of SR configuration information, that is, a same SR configuration ID is configured for an SL SRB that carries a PC5-RRC message and SL SRBs that carry three types of PC5-S messages.

For example, the SR configuration information corresponding to the SL SRB that carries the PC5-RRC message and the SL SRB that carries the PC5-S message is "schedulingRequestID=X".

### Manner 5

The base station 10 may determine same SR configuration information for to-be-transmitted messages of a same type, and determine different SR configuration information for to-be-transmitted messages of different types. In other words, all SL SRBs corresponding to the to-be-transmitted messages of a same type share one piece of SR configuration information, and all SL SRBs corresponding to the to-be-transmitted messages of different types correspond to different SR configuration information.

For example, SR configuration information corresponding to an SL SRB that carries a PC5-RRC message is "schedulingRequestID=X", and SR configuration information corresponding to an SL SRB that carries a PC5-S message is "schedulingRequestID=Y".

### Manner 6

The base station 10 may determine different SR configuration information for all to-be-transmitted messages.

For example, SR configuration information corresponding to an SL SRB that carries a PC5-RRC message is "schedulingRequestID=X", and SR configuration information corresponding to an SL SRB that carries each of three types of PC5-S messages is "schedulingRequestID=Y", "schedulingRequestID=Z", or "schedulingRequestID=W".

### Manner 7

The base station 10 may determine same SR configuration information for at least two to-be-transmitted messages.

For example, SR configuration information corresponding to an SL SRB that carries a PC5-RRC message is "schedulingRequestID=X", SR configuration information corresponding to an SL SRB that carries each of two types of PC5-S messages is "schedulingRequestID=Y", and SR configuration information corresponding to an SL SRB that carries one type of PC5-S message is "schedulingRequestID=Z".

In another possible implementation, in a process of determining the SR configuration information, in addition to a message type of the to-be-transmitted message buffered by the UE 20, the base station 10 may further consider different RX UEs that perform sidelink connections to the UE 20, so as to more flexibly determine the SR configuration information for the UE 20.

For example, as shown in FIG. 1, the UE 30 and the UE 40 may communicate with the UE 20, and the UE 30 and the UE 40 each may serve as RX UE. In this case, signaling to be sent by the UE 20 may include different signaling whose destination addresses are the UE 30 and the UE 40.

Specifically, when the RX UE includes different destination UEs, the first SR resource used to send the SR may be determined for the UE 20 in the following manners. The RX UE may be referred to as "target UE" or "destination UE".

### Manner 8

The base station 10 determines all target UEs of the UE 20, and determines that all SL SRBs of all the target UEs share one piece of SR configuration information, that is, determines same SR configuration information for all the SL SRBs of all the target UEs that are buffered by the UE 20, for example, an SL SRB that carries a PC5-RRC message and an SL SRB that carries a PC5-S message.

For example, the base station 10 determines that all SL SRBs of the UE 30 and the UE 40 have same SR configuration information.

It should be understood that, after establishing connections to the UE 20, the UE 30, and the UE 40, the base station 10 may obtain respective unique identities of the UE 20, the UE 30, and the UE 40, and then determine, based on the identities of the UE 30 and the UE 40 when allocating an SR resource to the UE 20, that an SL SRB between the UE 20 and the UE 30 and an SL SRB between the UE 20 and the UE 40 have same SR configuration information "schedulingRequestID=X".

It should be further understood that, in Manner 8, an identifier of target UE is not considered, and all SL SRBs of all target UEs have same SR configuration information.

### Manner 9

The base station 10 determines all target UEs of the UE 20, and determines different SR configuration information with reference to types of to-be-transmitted messages of all the target UEs.

For example, the to-be-transmitted messages of all the target UEs are classified into two types: a PC5-RRC message and a PC5-S message. SR configuration information of an SL SRB that carries the PC5-RRC message is determined as "schedulingRequestID=X", and SR configuration information of an SL SRB that carries the PC5-S message is determined as "schedulingRequestID=Y".

It should be understood that, in Manner 9, an identifier of target UE is not considered, but only a message type of a to-be-transmitted message carried on an SL SRB is considered. One piece of SR configuration information is determined for SL SRBs that each carry a PC5-RRC message in all target UEs, and another piece of SR configuration information is determined for SL SRBs that each carry a PC5-S message in all the target UEs.

### Manner 10

The base station 10 determines all target UEs of the UE 20, and determines different SR configuration information for different target UEs based on identities (ID) of the target UEs. In each target UE, same SR configuration information is configured for all SL SRBs.

For example, SR configuration information of an SL SRB that carries a PC5-RRC message and SR configuration information of an SL SRB that carries a PC5-S message in the UE 30 each are configured as "schedulingRequestID=X", and SR configuration information of an SL SRB that carries a PC5-RRC message and SR configuration information of an SL SRB that carries a PC5-S message in the UE 40 each are configured as "schedulingRequestID=Y" .

It should be understood that, in Manner 10, only an identifier of target UE is considered, and all to-be-transmitted messages in all target UEs have same SR configuration information.

### Manner 11

The base station 10 determines all target UEs of the UE 20, and associates different target UEs and different message types with different SR configuration information with reference to types of messages carried on SL SRBs and identifiers of all the target UEs.

For example, SR configuration information of an SL SRB that carries a PC5-RRC message in the UE 30 is configured as "schedulingRequestID=X", SR configuration information of an SL SRB that carries a PC5-S message in the UE 30 is configured as "schedulingRequestID=Y", SR configuration information of an SL SRB that carries a PC5-RRC message in the UE 40 is configured as "schedulingRequestID=M", and SR configuration information of an SL SRB that carries a PC5-S message in the UE 40 is configured as "schedulingRequestID=N".

It should be understood that, in Manner 11, both an identifier of target UE and a type of a message carried on an SL SRB are considered, and different SR configuration information is determined for different target UEs. In addition, in each target UE, an SL SRB that carries a PC5-RRC message and an SL SRB that carries a PC5-S message may be associated with different SR configuration information.

### Manner 12

On the basis of Manner 11, in Manner 12, different SR configuration information is determined for different target UEs and different message types with reference to a type of a message carried on an SL SRB and an identifier of target UE.

For example, SR configuration information of an SL SRB that carries a PC5-RRC message in the UE 30 is configured as "schedulingRequestID=X", SR configuration information of an SL SRB that carries each of three types of PC5-S messages in the UE 30 is configured as "schedulingRequestID=Y, M, or N", SR configuration information of an SL SRB that carries a PC5-RRC message in the UE 40 is configured as "schedulingRequestID=W", and SR configuration information of an SL SRB that carries each of three types of PC5-S messages in the UE 40 is configured as "schedulingRequestID=Z, L, or H".

It should be understood that, in Manner 12, both an identifier of target UE and a type of a message carried on an SL SRB are considered, and different SR configuration information is configured for different target UEs. In addition, in each target UE, an SL SRB that carries a PC5-RRC message and an SL SRB that carries a PC5-S message may respectively have different SR configuration information.

For example, in the implementation processes of Manner 4 to Manner 12 described above, SR configuration information may be added to SL-ConfigDedicatedNR, SL-ScheduledConfig, or MAC-MainConfigSL, to indicate SR configuration information dedicated to an SL SRB.

In conclusion, the base station configures different SR configuration information for different target UEs. In each target UE, both an SL SRB that carries a PC5-RRC message and SL SRBs that carry three types of PC5-S messages may have different SR configuration information.

If the base station 10 determines that dedicated SR configuration information can be currently configured for the SL SRB of the UE 20, the SR configuration information dedicated to the SL SRB is configured in SL-ConfigDedicatedNR, SL-ScheduledConfig, or MAC-MainConfigSL, and the UE 20 may send the SR by using an SR resource corresponding to the SR configuration information.

If the base station 10 currently does not configure dedicated SR configuration information for the SL SRB of the UE 20, the SR configuration information dedicated to the SL SRB is not configured in SL-ConfigDedicatedNR, SL-ScheduledConfig, or MAC-MainConfigSL. This means that the UE 20 needs to initiate a random access procedure to obtain an SR resource after the SL SRB triggers the SR.

According to the foregoing technical solution, a base station configures SR configuration information for UE, so that the UE can determine a first SR resource by using the SR configuration information, and send an SR to the base station by using the first SR resource, to request an uplink resource or an SL resource. This reduces signaling overheads, power consumption of the UE, and an uplink resource obtaining delay.

In another possible implementation, in S310, in a process of determining the SR configuration information, in addition to configuring a dedicated SR resource for an SL SRB between the UE 20 and the target UE or configuring a dedicated SR resource for different target UEs of the UE 20, the base station 10 may further configure a dedicated SR resource for the SL SRB by associating existing SR configuration information. In other words, when determining the SR configuration information for the UE 20, the base station 10 associates the SR configuration information with SR configuration information that has been configured during communication between the base station 10 and the UE 20.

For example, as shown in FIG. 1, for an established communication link between the UE 20 and the base station 10, the communication link may be a UL, and includes a data radio bearer (data radio bearer, DRB) used to transmit data and a signaling radio bearer (signaling radio bearer, SRB) used to transmit signaling. In addition, the DRB and the SRB each correspond to SR configuration information.

For example, the base station 10 may determine the SR configuration information for the UE 20 in the following manners.

### Manner 13

It is defined in the standard that SR configuration information of the SL SRB reuses SR configuration information of one SRB between the base station 10 and the UE 20, for example, reuses SR configuration information of SRB1 between the base station 10 and the UE 20, or reuses SR configuration information of SRB2 between the base station 10 and the UE 20. Therefore, after data of the SL SRB reaches to trigger the SR, the UE 20 may send the SR by using an SR resource corresponding to any configuration information in SRB 1 or SRB2.

It should be understood that, if SR configuration information of an SRB of a Uu interface between the base station 10 and the UE 20 is "schedulingRequestID=X", after the data of the SL SRB of the UE 20 reaches to trigger the SR, the UE 20 may send the SR by using an SR resource corresponding to the SR configuration information "schedulingRequestID=X". If the base station 10 does not configure SR configuration information for the SRB of the Uu interface, after the data of the SL SRB of the UE 20 reaches to trigger the SR, the UE 20 triggers a random access procedure to obtain an uplink resource.

### Manner 14

It is defined in the standard that SR configuration information of the SL SRB reuses SR configuration information of at least two SRBs (for example, SRB 1 and SRB2) between the base station 10 and the UE 20. Therefore, after data of the SL SRB reaches to trigger the SR, the UE 20 may send the SR by using an SR resource corresponding to any configuration information in SRB1 and SRB2.

### Manner 15

The base station 10 determines that SR configuration information of the SL SRB reuses SR configuration information of any DRB between the base station 10 and the UE 20.

If SR configuration information of any DRB of a Uu interface between the base station 10 and the UE 20 is "schedulingRequestID=Y", after the data of the SL SRB of the UE 20 reaches to trigger the SR, the UE 20 may send the SR by using an SR resource corresponding to the SR configuration information "schedulingRequestID=Y" of the any DRB.

### Manner 16

The base station 10 determines that SR configuration information of the SL SRB reuses SR configuration information of any DRB between the UE 20 and the UE 30 (or the UE 40). In other words, the base station 10 determines that the SR configuration information of the SL SRB reuses SR configuration information of any SL DRB of the UE 20.

If SR configuration information of any DRB of a PC5 interface between the UE 20 and the UE 30 (or the UE 40) is "schedulingRequestID=Y", after the data of the SL SRB of the UE 20 reaches to trigger the SR, the UE 20 may send the SR by using an SR resource corresponding to the SR configuration information "schedulingRequestID=Y" of the any DRB.

### Manner 17

It is defined in the standard that SR configuration information of the SL SRB and a sidelink SL channel state information (channel state information, CSI) report reuse same SR configuration information. The SL CSI report may be transmitted by using a media access control (media access control, MAC) control element (control element, CE).

If the base station 10 configures SR configuration information for the SL CSI report, after data of the SL SRB reaches to trigger the SR, the UE 20 may send the SR by using an SR resource corresponding to the SR configuration information.

If the base station 10 does not configure SR configuration information for the SL CSI report, after the data of the SL SRB of the UE 20 reaches to trigger the SR, the UE 20 triggers a random access procedure to obtain an uplink resource.

It should be noted that any one or more of Manner 13 to Manner 17 may be further combined. For example, if Manner 15 and Manner 16 are combined, it indicates that the base station 10 determines that the SR configuration information of the SL SRB reuses the SR configuration information of any DRB in the DRB between the base station 10 and the UE 20 and the sidelink DRB of the UE 20.

According to the foregoing technical solution, a base station associates determined SR configuration information with existing SR configuration information when configuring an SR resource for UE, so that the UE can determine a first SR resource by using the SR configuration information, and send an SR to the base station by using the first SR resource, to request an uplink resource or an SL resource. This reduces signaling overheads, power consumption of the UE, and an uplink resource obtaining delay.

In still another possible implementation, the SR configuration information further includes indication information, and the indication information indicates whether the first SR resource is an SR resource for requesting a sidelink sidelink, or the indication information indicates whether the configured SR configuration information can be used for an SL SRB on a sidelink sidelink.

Optionally, when determining the SR configuration information, the base station 10 may add an indication field to the SR configuration information, to indicate whether the configured SR configuration information between the base station 10 and/or the UE 20 can be used to determine SR configuration information of an SL SRB on a current sidelink. For example, one field is added to the SR configuration information, to indicate whether the SR configuration information can be used for the SL SRB.

Alternatively, two fields are added to the SR configuration information. One field is used to indicate whether the SR configuration information can be used for SR configuration information that carries an SL SRB of PC5-RRC, and the other field is used to indicate whether the SR configuration information can be used for SR configuration information that carries an SL SRB of PC5-S.

Alternatively, four fields may be added to the SR configuration information. One field is used to indicate whether the SR configuration information can be used for SR configuration information that carries an SL SRB of PC5-RRC, and the other three fields are respectively used to indicate whether the SR configuration information can be used for three pieces of SR configuration information that each carry an SL SRB of PC5-S.

It should be understood that, if the base station 10 determines dedicated SR configuration information for the SL SRB of the UE 20, the indication information is added to SchedulingRequestToAddMod (Uu parameter). Otherwise, if the base station 10 determines no dedicated SR configuration information for the SL SRB of the UE 20, the indication information is not added to SchedulingRequestToAddMod (Uu parameter).

Correspondingly, the UE 20 may determine, based on whether SchedulingRequestToAddMod includes the indication information, whether to send an SR or trigger a random access procedure to obtain an uplink resource.

According to the foregoing technical solution, the indication information is added to the SR configuration information determined by the base station, so that the UE can determine, based on the indication information, whether the first resource can be used as the SR resource for requesting the sidelink sidelink. When the first resource can be used as the SR resource for requesting the sidelink sidelink, the UE may determine the first SR resource by using the SR configuration information, and send the SR to the base station by using the first SR resource, to request an uplink resource or an SL resource. This reduces signaling overheads, power consumption of the UE, and an uplink resource obtaining delay. When the first resource cannot be used as the SR resource for requesting the sidelink sidelink, the UE may trigger a random access procedure to obtain an uplink resource.

Several possible embodiments are listed below.

### Embodiment 1

A sidelink control channel (Sidelink Control Channel, SCCH) is used to transmit a PC5-RRC message and a PC5-S message. In a dedicated configuration of the SCCH, a parameter is added to indicate an SR configuration ID, for example, "schedulingRequestID=X". There may be one or more IDs indicating an SR configuration, for example, schedulingRequestID=X, Y, Z...

Specific configuration granularities are as follows:
(1) All SL SRBs share one SR configuration ID, that is, a same SR configuration ID is configured for an SCCH corresponding to a PC5-RRC message and SCCHs corresponding to three types of PC5-S messages.
(2) Different SR configuration IDs may be configured for an SCCH corresponding to a PC5-RRC message and an SCCH corresponding to PC5-S message. For example, the SCCH corresponding to the PC5-RRC message is associated with "schedulingRequestID=X", and the SCCH corresponding to the PC5-S message is associated with "schedulingRequestID=Y".
(3) Different SR configuration IDs may be configured for an SCCH corresponding to a PC5-RRC message and SCCHs corresponding to three types of PC5-S message. For example, the SCCH corresponding to the PC5-RRC message is associated with "schedulingRequestID=X", and the SCCH corresponding to the PC5-S message is associated with "schedulingRequestID=Y, Z, or W".

If the base station is willing to configure a dedicated SR for the SL SRB of the UE, a corresponding SR configuration ID (SchedulingRequestId) is configured in SchedulingRequestConfig (Uu parameter). If the base station is unwilling to configure a dedicated SR for the SL SRB of the UE, a corresponding SR configuration ID (SchedulingRequestId) is not configured in SchedulingRequestConfig (Uu parameter).

Correspondingly, the UE may determine, based on whether SchedulingRequestConfig includes the configuration "SchedulingRequestId=X", whether to send an SR or trigger a random access procedure to obtain an uplink resource.

### Embodiment 2

SL-ConfigDedicatedNR or SL-ScheduledConfig includes an SR configuration ID dedicated to an SL SRB.

Specific configuration granularities are as follows:
(1) All SL SRBs of all target UEs (the RX UE for the TX UE) share one SR configuration ID, that is, an SCCH corresponding to a PC5-RRC message and SCCHs corresponding to three types of PC5-S messages in all the target UEs are associated with a same SR configuration ID.
(2) Different SR configuration IDs may be configured for an SCCH corresponding to a PC5-RRC message in all target UEs and an SCCH corresponding to PC5-S message in all the target UEs. For example, the SCCH corresponding to the PC5-RRC message in all the target UEs is associated with "schedulingRequestID=X", and the SCCH corresponding to the PC5-S message in all the target UEs is associated with "schedulingRequestID=Y".
(3) Different SR configuration IDs are configured for different target UEs. In each target UE, all SL SRBs share one SR configuration ID. For example, an SCCH corresponding to a PC5-RRC message and SCCHs corresponding to three types of PC5-S messages in each target UE may be associated with one SR configuration ID.
(4) Different SR configuration IDs are configured for different target UEs. In each target UE, different SR configuration IDs may be configured for an SCCH corresponding to a PC5-RRC message and an SCCH corresponding to PC5-S message.
(5) Different SR configuration IDs are configured for different target UEs. In each target UE, different SR configuration IDs may be configured for an SCCH corresponding to a PC5-RRC message and SCCHs corresponding to three types of PC5-S message.

If the base station is willing to configure a dedicated SR for the SL SRB of the UE, SL-ConfigDedicatedNR or SL-ScheduledConfig includes an SR configuration ID dedicated to the SL SRB. If the base station is unwilling to configure a dedicated SR for the SL SRB of the UE, SL-ConfigDedicatedNR or SL-ScheduledConfig does not include an SR configuration ID dedicated to the SL SRB. This means that a random access procedure needs to be performed to obtain an uplink resource after the SL SRB triggers the SR.

### Embodiment 3

It is defined in the standard that an SL SRB uses a same SR configuration ID as Uu SRB1.

If the base station configures an SR configuration ID for Uu SRB1, after data of the SL SRB reaches to trigger the SR, the UE may send the SR by using an SR resource corresponding to the SR configuration ID. If the base station does not configure an SR configuration ID for Uu SRB1, after data of the SL SRB of the UE reaches to trigger the SR, the UE triggers a random access procedure to obtain an uplink resource.

In an optional extension solution, the SL SRB uses a same SR configuration ID as Uu SRB1 or SRB2. If the base station configures an SR configuration ID for Uu SRB1 or SRB2, after the data of the SL SRB reaches to trigger the SR, the UE may send the SR by using an SR resource corresponding to any SR configuration ID in SRB1 and SRB2.

In another optional extension solution, the SL SRB uses a same SR configuration ID as Uu SRB1 or SRB2 or DRB. If the base station configures an SR configuration ID for Uu SRB1 or SRB2 or DRB, after the data of the SL SRB reaches to trigger the SR, the UE may send the SR by using an SR resource corresponding to any SR configuration ID in SRB1, SRB2, and the DRB.

Alternatively, it is defined in the standard that the SL SRB uses a same SR configuration ID as an SL channel state information (Channel State Information, CSI) report. The SL CSI report is transmitted by using a media access control (Media Access Control, MAC) control element (Control Element, CE).

If the base station configures an SR configuration ID for the SL CSI report, after data of the SL SRB reaches to trigger the SR, the UE may send the SR by using an SR resource corresponding to the SR configuration ID. If the base station does not configure an SR configuration ID for the SL CSI report, after data of the SL SRB of the UE reaches to trigger the SR, the UE triggers a random access procedure to obtain an uplink resource.

### Embodiment 4

An indication field is added to indicate whether a Uu SR configuration can be used for an SL SRB. For example, one field is added to the SR configuration information, to indicate whether the SR configuration information can be used for the SL SRB.

In an optional extension solution, there may be two fields respectively indicating whether a corresponding SR configuration can be used for an SL SRB that carries PC5-RRC and an SL SRB that carries PC5-S.

In another optional extension solution, there may be four fields respectively indicating whether a corresponding SR configuration can be used for an SL SRB that carries PC5-RRC and three SL SRBs that carry PC5-S.

If the base station is willing to configure a dedicated SR configuration for the SL SRB of the UE, the indication is added to SchedulingRequestToAddMod (Uu parameter); otherwise, the indication is not added.

Correspondingly, the UE may determine, based on whether SchedulingRequestToAddMod includes the indication, whether to send an SR or trigger a random access procedure to obtain an uplink resource.

According to the foregoing embodiment, the base station may flexibly decide whether to configure the dedicated SR resource for the SL SRB of the UE. When the base station configures the dedicated SR resource for the SL SRB of the UE, the UE may send the SR to request the uplink resource or the SL resource from the base station. This reduces signaling overheads, power consumption of the UE, and an uplink resource obtaining delay.

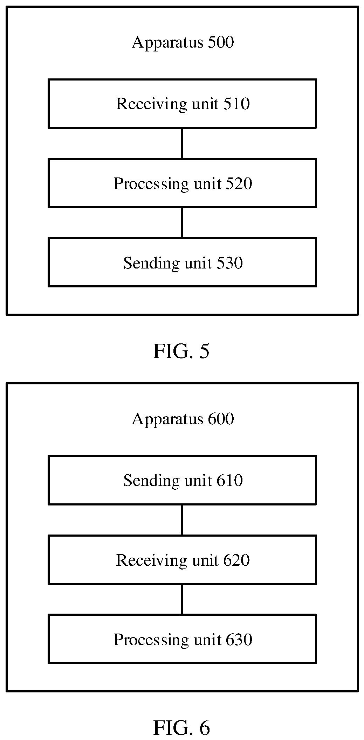

The foregoing describes in detail the resource determining methods in embodiments of this application with reference to FIG. 1 to FIG. 4. The following describes in detail the resource determining apparatuses in embodiments of this application with reference to FIG. 5 to FIG. 8.

FIG. 5 is a schematic block diagram of a resource determining apparatus 500 according to an embodiment of this application. The apparatus 500 may correspond to the transmission user equipment UE 20 (TX UE) described in the method 300 or the method 400, or may be a chip or a component applied to the UE 20. In addition, modules or units in the apparatus 500 are separately configured to perform actions or processing processes performed by the UE 20 in the method 300 or the method 400. As shown in FIG. 5, the resource determining apparatus 500 may include a receiving unit 510, a processing unit 520, and a sending unit 530.

The receiving unit 510 is configured to receive scheduling request SR configuration information sent by a network device, where the SR configuration information corresponds to a sidelink signaling radio bearer SL SRB, and the SR configuration information is used to indicate a first SR resource.

The processing unit 520 is configured to determine the corresponding first SR resource based on the SR configuration information.

The sending unit 530 is configured to send an SR to the network device by using the first SR resource.

Specifically, the receiving unit 510 is configured to perform processes of S310 and S330 in the method 300 and S420 in the method 400, the processing unit 520 is configured to perform processes of S340 in the method 300 and S430 in the method 400, and the sending unit 530 is configured to perform processes of S350 in the method 300 and S440 in the method 400. Specific processes of performing the foregoing corresponding steps by the units are described in detail in the method 300 and the method 400. For brevity, details are not described herein again.

FIG. 6 is a schematic block diagram of a resource determining apparatus 600 according to an embodiment of this application. The apparatus 600 may correspond to (for example, may be applied to or may be) the base station 10 described in the method 300 or the method 400. In addition, modules or units in the apparatus 600 are separately configured to perform actions or processing processes performed by the base station in the method 300 or the method 400. As shown in FIG. 6, the communications apparatus 600 may include a sending unit 610 and a receiving unit 620.

The sending unit 610 is configured to send scheduling request SR configuration information to transmission user equipment, where the SR configuration information corresponds to a sidelink signaling radio bearer SL SRB, the SR configuration information is used to indicate a first SR resource, and the transmission user equipment is a device on a sidelink SL.

The receiving unit 620 is configured to receive an SR that is sent by the transmission user equipment by using the first SR resource.

Optionally, the apparatus 600 includes a processing unit 630, configured to determine the corresponding first SR resource based on preset SR configuration information.

Specifically, the sending unit 610 is configured to perform S310 and S330 in the method 300 and S420 in the method 400, and the receiving unit 620 is configured to perform processes of S350 in the method 300 and S440 in the method 400. Specific processes of performing the foregoing corresponding steps by the units are described in detail in the method 300 and the method 400. For brevity, details are not described herein again.

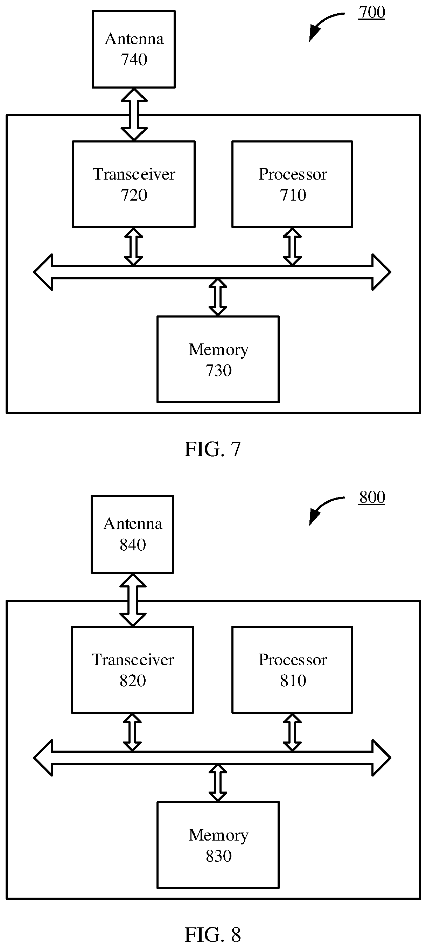

FIG. 7 is a schematic diagram of a structure of user equipment 700 according to an embodiment of this application, for example, the transmission user equipment in embodiments of this application. As shown in FIG. 7, the user equipment 700 includes a processor 710 and a transceiver 720. Optionally, the user equipment 700 further includes a memory 730. The processor 710, the transceiver 720, and the memory 730 communicate with each other through an internal connection channel to transmit a control signal and/or a data signal. The memory 730 is configured to store a computer program. The processor 710 is configured to invoke the computer program from the memory 730 and run the computer program to control the transceiver 720 to send and receive a signal.

The processor 710 and the memory 730 may be integrated into one processing apparatus. The processor 710 is configured to execute program code stored in the memory 730 to implement the functions of the transmission user equipment in the foregoing method embodiment. During specific implementation, the memory 730 may alternatively be integrated into the processor 710, or may be independent of the processor 710. The transceiver 720 may be implemented by a transceiver circuit.

The transmission user equipment may further include an antenna 740, configured to send, by using a radio signal, uplink data or uplink control signaling that is output by the transceiver 720, or send, after receiving downlink data or downlink control signaling, the downlink data or the downlink control signaling to the transceiver 720 for further processing.

It should be understood that the user equipment 700 may correspond to the transmission user equipment in the method 300 and the method 400 according to embodiments of this application, or the user equipment 700 may be a chip or a component applied to the user equipment. In addition, the modules in the user equipment 700 implement corresponding procedures in the method 300 and the method 400. Specifically, the memory 730 is configured to store program code. Therefore, when the processor 710 executes the program code, the processor 710 is controlled to perform processes of S340 in the method 300 and S430 in the method 400, and the transceiver 720 is controlled to perform processes of S350 in the method 300 and S440 in the method 400. Specific processes of performing the foregoing corresponding steps by the units are described in detail in the method 300 and the method 400. For brevity, details are not described herein again.

FIG. 8 is a schematic diagram of a structure of a network device 800 according to an embodiment of this application. As shown in FIG. 8, the network device 800 (for example, a base station) includes a processor 810 and a transceiver 820. Optionally, the network device 800 further includes a memory 830. The processor 810, the transceiver 820, and the memory 830 communicate with each other through an internal connection channel to transmit a control signal and/or a data signal. The memory 830 is configured to store a computer program. The processor 810 is configured to invoke the computer program from the memory 830 and run the computer program to control the transceiver 820 to send and receive a signal.

The processor 810 and the memory 830 may be integrated into one processing apparatus. The processor 810 is configured to execute program code stored in the memory 830 to implement the functions of the base station in the foregoing method embodiment. During specific implementation, the memory 830 may alternatively be integrated into the processor 810, or may be independent of the processor 810. The transceiver 820 may be implemented by a transceiver circuit.

The network device may further include an antenna 840, configured to send, by using a radio signal, downlink data or downlink control signaling that is output by the transceiver 820, or send, after receiving uplink data or uplink control signaling, the uplink data or the uplink control signaling to the transceiver 820 for further processing.

It should be understood that the network device 800 may correspond to the base station in the method 400 according to the embodiment of this application, or the network device 800 may be a chip or a component applied to the base station. In addition, the modules in the network device 800 implement corresponding procedures in the method 400 in FIG. 4. Specifically, the memory 830 is configured to store program code. Therefore, when the processor 810 executes the program code, the processor 810 is controlled to perform S320 in the method 300 and S410 in the method 400, and the transceiver 820 is controlled to perform S310 and S330 in the method 300 and S420 in the method 400 or to perform processes of S350 in the method 300 and S440 in the method 400. Specific processes of performing the foregoing corresponding steps by the units are described in detail in the method 300 and the method 400. For brevity, details are not described herein again.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the described system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined. In addition, the displayed or discussed mutual couplings or communication connections may be indirect couplings or communication connections through some interfaces, apparatuses, or units.

In addition, function units in embodiments of this application may be integrated into one physical entity, or each of the units may separately correspond to one physical entity, or two or more units may be integrated into one physical entity.

When the functions are implemented in a form of a software function unit and sold or used as an independent product, the functions may be stored in a computer-readable storage medium. Based on such an understanding, the technical solution of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this paper, we discussed one issue on the SR configuration for SL SRB.

For the RRC connected UE, if the UE is configured to use SL Mode 1 for resource allocation, the gNB can decide whether to configure dedicated SR configuration/resources for the UE. If SR is triggered and the UE has dedicated SR configuration/resources, the UE uses such dedicated configuration/resources to send the scheduling request. Otherwise, the UE needs to trigger the random access procedure.

For the SL DRB, it can be configured by the gNB via the dedicated signaling if the UE is in RRC Connected. In the logical channel configuration of the SL DRB, one parameter is the SR configuration as shown below. So via this signaling, the gNB can configure dedicated SR configuration/resource for the UE per SLDRB if it decides to do so.

```
          SL-LogicalChannelConfig-r16 ::= SEQUENCE {
              sl-Priority-r16 INTEGER (1..8),
              sl-PrioritisedBitRate-r16 ENUMERATED {kBps0, kBps8, kBps16, kBps32, kBps64,
              kBps128, kBps256, kBps512,kBps1024, kBps2048,
kBps4096, kBps8192, kBps16384, kBps32768, kBps65536,
              infinity},
              sl-BucketSizeDuration-r16 ENUMERATED {ms5, ms10, ms20, ms50, ms100, ms150,
 ms300, ms500, ms1000, spare7, spare6, spare5, spare4, spare3, spare2, spare1},
              sl-ConfiguredGrantType1Allowed-r16 ENUMERATED {true}
 OPTIONAL, -- Need R
              sl-HARQ-FeedbackEnabled-r16 ENUMERATED {enabled, disabled}
 OPTIONAL, -- Need R
              sl-LogicalChannelGroup-r16 INTEGER (0..maxLCG-ID) OPTIONAL,
 -- Need R
              sl-SchedulingRequestId-r16 SchedulingRequestId OPTIONAL,
 -- Need R
              sl-LogicalChannelSR-DelayTimerApplied-r16 BOOLEAN
 OPTIONAL, -- Need R
```

Observation 1: for SL DRB, gNB can configure SR configuration/resource associate with it via the logical channel configuration of the SL DRB.

In addition to SL DRB, four SL SRBs, which are used for transmit PC5-S message and PC5-RRC message are also defined in NR SL. However, the SL SRB related configurations, including PDCP, RLC configuration and logical channel configurations are specified in 9.1.1 of 38.331[1], which means that no dedicated signalling is defined to reconfigure the SL SRB configurations. So, for the SL SRB, there is no way for the gNB to configure dedicated SR configuration/resource for the UE with SL Mode 1. In other words, in case the SR is triggered by SL SRB, the UE can only trigger random access procedure in order to request SL grant.

Observation 2: There is no signalling supporting to configure dedicated SR configuration/resource which is associated with the SL SRB.

According to the above observations, the current signalling design seems not reasonable. In our understanding, the signalling that could enable the gNB to configure dedicated SR configuration/resource for the UE's SL SRB should be supported in the specification, instead of only relying on the random access to request SL grant for SL SRB transmission.

Proposal 1: The signalling that could enable the gNB to configure dedicated SR configuration/resource associated with the UE's SL SRB should be specified.

For the signalling design, there could be some options:

Option 1: Include SR configuration ID(s) which is associated to the SL SRB in the *SL*-*ScheduledConfig.*

The SR configuration ID could be common for all the destination and for all the four SL SRBs. Or the SR configuration ID could be per destination but common for all the four SL SRBs.

Option 2: In the specified SCCH configuration, add one new parameter, i.e., SR configuration ID. If the gNB decides to configure the SR configuration/resource for the SCCH, the gNB can add such SR configuration ID in the *SchedulingRequestToAddMod.* If there is no such SR configuration ID in the *SchedulingRequestToAddMod*, the UE needs to trigger random access procedure in case the SR is triggered by SL SRB.
- This option has no any impact on the ASN.1.

Option 3: The SL SRB can use any SR configuration ID that is configured for the UE. As for which SR configuration to use can be up to UE implementation. With this option, it seems only a Note is needed in the specification. However, gNB has no way to decide whether to configure the SL SRB to use SR or random access for requesting SL grant if go for this option.

From our perspective, we don't have strong preference, and RAN2 is kindly request to discuss which option to be adopted.

Proposal 2: RAN2 to discuss which of above three options to be adopted in order to enable the SL SRB can be associated with SR configuration/resource.

In this paper, we discuss one issue on the SR configuration for SL SRB, and have the following proposals:

Proposal 1: The signalling that could enable the gNB to configure dedicated SR configuration/resource associated with the UE's SL SRB should be specified.

Proposal 2: RAN2 to discuss which of above three options to be adopted in order to enable the SL SRB can be associated with SR configuration/resource.

In this paper, we discussed one issue on an SR configuration for an SL SRB.

For RRC connected UE, if the UE is configured to use SL Mode 1 for resource allocation, a gNB can decide whether to configure a dedicated SR configuration/resource for the UE. If an SR is triggered and the UE has the dedicated SR configuration/resource, the UE uses the dedicated configuration/resource to send the scheduling request. Otherwise, the UE needs to trigger a random access procedure.

For an SL DRB, the gNB may perform configuration for the RRC connected UE by using dedicated signaling. In a logical channel configuration of the SL DRB, one parameter is an SR configuration, which is shown below Therefore, by using this signaling, the gNB can configure dedicated SR configuration/resource for the UE per SL DRB if the gNB decides to do so.

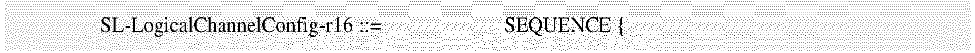

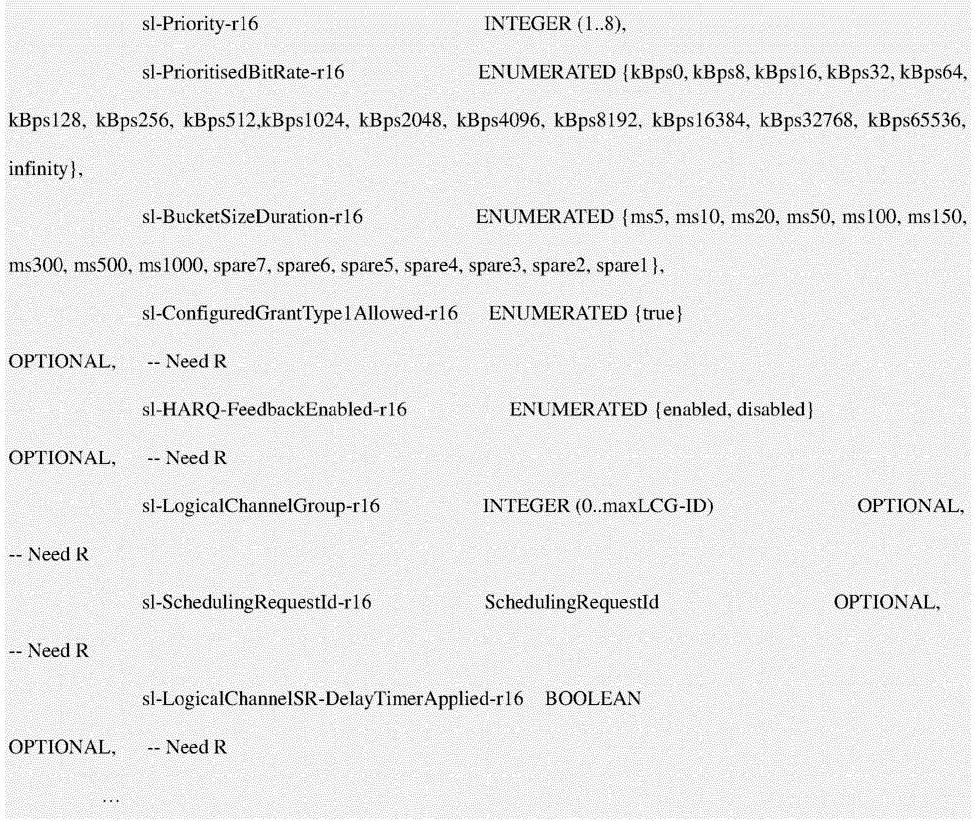

Observation 1: For the SL DRB, the gNB can configure an SR configuration/resource of the SL DRB by using the logical channel configuration of the SL DRB.

In addition to the SL DRB, four SL SRBs used to transmit a PC5-S message and a PC5-RRC message are also defined in NR SL. However, the SL SRB related configurations including PDCP, RLC configurations, and logical channel configurations are specified in 9.1.1 of 38.331 [1], which means that no dedicated signaling is defined to reconfigure the SL SRB configurations. Therefore, for the SL SRB, the gNB cannot configure a dedicated SR configuration/resource for the UE with SL Mode 1. In other words, if the SR is triggered by the SL SRB, the UE can only trigger a random access procedure to request SL grant.

Observation 2: There is no signaling supporting to configure a dedicated SR configuration/resource related to the SL SRB in the conventional technology.

According to the foregoing observations, a current signaling design seems not reasonable. In our understanding, the signaling that could enable the gNB to configure a dedicated SR configuration/resource for the UE's SL SRB should be supported in the specification, instead of only relying on the random access to request SL grant for SL SRB transmission.

Proposal 1: The signaling that can enable the gNB to configure the dedicated SR configuration/resource related to the UE's SL SRB should be specified.

For the signaling design, there may be some options:

Option 1: Add an SR configuration ID associated with the SL SRB to the SL-ScheduledConfig field.

The SR configuration ID is common for all targets and for all the four SL SRBs. Alternatively, the SR configuration ID may be target-specific but common for all the four SL SRBs.

Option 2: In the specified SCCH configuration, add one new parameter, for example, an SR configuration ID. If the gNB decides to configure the SR configuration/resource for the SCCH, the gNB can add the SR configuration ID to SchedulingRequestToAddMod. If there is no such an SR configuration ID in SchedulingRequestToAddMod, the UE needs to trigger a random access procedure when the SR is triggered by the SL SRB.

This option has no impact on ASN.1.

Option 3: The SL SRB can use any SR configuration ID that is configured for the UE. As for which SR configuration to use can be up to UE implementation. With this option, it seems only a Note is needed in the specification. However, the gNB cannot decide whether to configure the SL SRB to use the SR or random access for requesting SL grant if go for this option.

From our perspective, we do not have strong preference, and RAN2 is kindly request to discuss which option to be adopted.

Proposal 2: Use at least one of the foregoing three options to enable the SL SRB to be associated with the SR configuration/resource.

In this paper, we discuss one issue on the SR configuration for the SL SRB, and have the following proposals:

Proposal 1: The signaling that can enable the gNB to configure the dedicated SR configuration/resource related to the UE's SL SRB should be specified.

Proposal 2: Use at least one of the foregoing three options to enable the SL SRB to be associated with the SR configuration/resource.

## Claims

1. A resource determining method, wherein the method comprises:
receiving, by transmission user equipment, first scheduling request SR configuration information sent by a network device; and
if the transmission user equipment determines that the first SR configuration information comprises preset SR configuration information, wherein the preset SR configuration information is SR configuration information of a sidelink signaling radio bearer SL SRB that is specified in a protocol,
sending, by the transmission user equipment, an SR to the network device on a first SR resource determined based on the preset SR configuration information.

2. The method according to claim 1, wherein the method further comprises:
if the first SR configuration information does not comprise the preset SR configuration information, or the first SR configuration information is not the preset SR configuration information, initiating, by the transmission user equipment, a random access procedure to the network device.

3. The method according to claim 1 or 2, wherein the first SR configuration information comprises one or more SR identifiers IDs.

4. The method according to any one of claims 1 to 3, wherein the preset SR configuration information comprises one or more preset SR IDs.

5. The method according to claim 3 or 4, wherein the preset SR configuration information is comprised in a dedicated configuration of a sidelink control channel SCCH.

6. The method according to any one of claims 1 to 5, wherein
the SR configuration information is SR configuration information of at least one signaling radio bearer SRB between the transmission user equipment and the network device; and/or
the SR configuration information is SR configuration information of at least one data radio bearer DRB between the transmission user equipment and the network device; and/or
the SR configuration information is SR configuration information of at least one sidelink data radio bearer SL DRB of the transmission user equipment; and/or
the SR configuration information is SR configuration information of at least one sidelink channel state information CSI report of the transmission user equipment.

7. The method according to any one of claims 1 to 6, wherein the transmission user equipment buffers a to-be-transmitted message to be sent to at least one reception user equipment; and
all the to-be-transmitted messages have same preset SR configuration information; or
all the to-be-transmitted messages have different preset SR configuration information; or
to-be-transmitted messages of a same type have same preset SR configuration information, and to-be-transmitted messages of different types have different preset SR configuration information; or
at least two to-be-transmitted messages have same preset SR configuration information; or
to-be-transmitted messages of same reception user equipment have same preset SR configuration information; or
to-be-transmitted messages of different types of same reception user equipment have different preset SR configuration information; or
to-be-transmitted messages of different types of different reception user equipments have different preset SR configuration information; or
to-be-transmitted messages of a same type of different reception user equipments have same preset SR configuration information.

8. The method according to claim 7, wherein the to-be-transmitted message comprises at least one of a PC5 radio resource control, PC5-RRC, message, an unprotected PC5 signaling PC5-S message, a PC5-S message establishing PC5-S security, and a protected PC5-S message.

9. A resource determining method, wherein the method comprises:
sending, by a network device, first scheduling request SR configuration information to transmission user equipment, wherein the first SR configuration information comprises preset SR configuration information, and the preset SR configuration information is SR configuration information of a sidelink signaling radio bearer SL SRB that is specified in a protocol; and
receiving, by the network device, an SR sent by the transmission user equipment on a first SR resource determined based on the preset SR configuration information.

10. The method according to claim 9, wherein the first SR configuration information comprises one or more SR identifiers IDs.

11. The method according to claim 9 or 10, wherein the preset SR configuration information comprises one or more preset SR IDs.

12. The method according to claim 10 or 11, wherein the preset SR configuration information is comprised in a dedicated configuration of a sidelink control channel SCCH.

13. The method according to any one of claims 9 to 12, wherein
the SR configuration information is SR configuration information of at least one signaling radio bearer SRB between the transmission user equipment and the network device; and/or
the SR configuration information is SR configuration information of at least one data radio bearer DRB between the transmission user equipment and the network device; and/or
the SR configuration information is SR configuration information of at least one sidelink data radio bearer SL DRB of the transmission user equipment; and/or
the SR configuration information is SR configuration information of at least one sidelink channel state information CSI report of the transmission user equipment.

14. The method according to any one of claims 10 to 13, wherein the transmission user equipment buffers a to-be-transmitted message to be sent to at least one reception user equipment; and
all the to-be-transmitted messages have same preset SR configuration information; or
all the to-be-transmitted messages have different preset SR configuration information; or
to-be-transmitted messages of a same type have same preset SR configuration information, and to-be-transmitted messages of different types have different preset SR configuration information; or
at least two to-be-transmitted messages have same preset SR configuration information; or
to-be-transmitted messages of same reception user equipment have same preset SR configuration information; or
to-be-transmitted messages of different types of same reception user equipment have different preset SR configuration information; or
to-be-transmitted messages of different types of different reception user equipments have different preset SR configuration information; or
to-be-transmitted messages of a same type of different reception user equipments have same preset SR configuration information.

15. The method according to claim 14, wherein the to-be-transmitted message comprises at least one of a PC5 radio resource control PC5-RRC message, an unprotected PC5 signalingPC5-S message, a PC5-S message establishing PC5-S security, and a protected PC5-S message.

16. User equipment, comprising a processor and a memory, wherein
the processor is coupled to the memory, the memory is configured to store programs or instructions, and when the programs or the instructions are executed by the processor, the user equipment is enabled to perform the method according to any one of claims 1 to 8; and
the memory is configured to store program instructions and data.

17. A network device, comprising a processor and a memory, wherein
the processor is coupled to the memory, the memory is configured to store programs or instructions, and when the programs or the instructions are executed by the processor, the network device is enabled to perform the method according to any one of claims 9 to 15; and
the memory is configured to store program instructions and data.

18. A computer-readable storage medium, wherein the computer-readable storage medium stores a computer program, and when the computer program is executed, the method according to any one of claims 1 to 15 is implemented.

19. A chip system, wherein the chip system comprises:
a memory, configured to store instructions; and
a processor, configured to invoke the instructions from the memory and run the instructions, so that a communications device in which the chip system is installed performs the method according to any one of claims 1 to 15.
